Europäisches Patentamt

European Patent Office

Office européen des brevets

(19)

(11) Numéro de publication: **0 108 659**
**A1**

## (12) DEMANDE DE BREVET EUROPEEN

(21) Numéro de dépôt: **83401891.3**

(22) Date de dépôt: **27.09.83**

(51) Int. Cl.³: **H 04 N 7/13**
**H 04 N 1/41, G 06 K 9/60**

(30) Priorité: **08.10.82 FR 8216900**

(43) Date de publication de la demande:
**16.05.84 Bulletin 84/20**

(84) Etats contractants désignés:
**CH DE GB IT LI SE**

(71) Demandeur: **THOMSON-CSF**
**173, Boulevard Haussmann**
**F-75379 Paris Cedex 08(FR)**

(72) Inventeur: **Richard, Christian**
**THOMSON-CSF SCPI 173, bld Haussmann**
**F-75379 Paris Cedex 08(FR)**

(74) Mandataire: **Turlèque, Clotilde et al,**
**THOMSON-CSF SCPI 173, Bld Haussmann**
**F-75379 Paris Cedex 08(FR)**

(54) **Procédé de codage et de décodage d'une image et dispositifs pour la mise en oeuvre de ce procédé.**

(57) L'invention concerne le codage des images de télévision en vue de réduire la quantité d'informations de ces images pour les transmettre ou les stocker.

Si, par exemple, une image est constituée de points blancs sur un fond noir le codage consiste à regrouper dans des zones des points blancs connexes, puis consiste à décomposer chaque zone en segments parallèles et connexes, puis à coder un premier segment en déterminant trois valeurs définissant sa position dans l'image et sa longueur, à coder un (k + 1) ième segment par deux valeurs définissant sa position relativement à un k ième segment codé immédiatement précédemment et par une valeur définissant sa longueur. Le (k + 1) ième segment est choisi parmi les segments connexes au k ième segment s'il y en a, sinon il est choisi parmi les segments qui appartiennent à la zone considérée et n'ont pas encore été codés. Sur la figure les chiffres et les flèches indiquent respectivement l'ordre de description et l'ordre de codage et transmission des segments pour un exemple de zone. Les données décrivant les segments représentés en pointillés sont mises en attente jusqu'à ce qu'il n'y ait plus de segments connexes pouvant constituer un (k + 1) ième segment, ce qui se produit après le codage et la transmission du segment no. 13.

Application à la transmission et au stockage d'images comprimées.

Fig. 2

EP 0 108 659 A1

Procédé de codage et de décodage d'une image et
dispositifs pour la mise en oeuvre de ce procédé

La présente invention concerne un procédé de codage et de décodage d'une image en vue de réduire la quantité d'informations pour transmettre ou stocker cette image. L'invention concerne aussi un dispositif de codage et un dispositif de décodage pour la mise en oeuvre de ce procédé, pour coder une image avant de la transmettre ou la stocker, puis la décoder pour la restituer.

Un procédé de codage d'images, dit codage par plages, est connu. Il consiste à regrouper en segments des points voisins appartenant à une même ligne de l'image et ayant des valeurs de luminance approximativement identiques, et à coder chaque segment par sa valeur de luminance et sa longueur. Le procédé de codage par plages opère donc un regroupement unidimensionnel.

Le brevet américain US 4,103,287 décrit un procédé de codage consistant à regrouper des points connexes ayant une même propriété, par exemple une même valeur de luminance, dans des zones bidimensionnelles ; puis à coder chaque zone segment par segment, dans l'ordre où ces segments sont analysés ; puis, à la réception, décoder successivement chaque segment de chaque zone. Le regroupement des points en zones permet d'exploiter la corrélation entre les informations contenues dans deux lignes successives. Dans ce brevet américain, l'algorithme d'attribution des points à une zone est très simple : il ne crée que des zones composées de segments dont les extrémités sont peu éloignées des extrémités du segment connexe situé au-dessus, par exemple éloignées de $\pm 3$ points. Lorsqu'une zone est très étendue et découpée, cet algorithme la fractionne en petites zones connexes. Or la quantité d'informations à transmettre augmente avec le nombre de zones, par conséquent ce procédé est peu efficace pour les images, telles que les images de

2

télévision, composées de zones étendues, par contre il convient mieux pour transmettre des fac-similés de documents composés de petits caractères sur un fond uniforme.

Le procédé selon l'invention réalise un regroupement de tous les points d'un ensemble de points connexes, ayant une propriété donnée, quelque soit l'étendue et la forme de la zone qu'ils constituent. Après la détermination des zones de toute une image, il consiste à coder successivement chaque zone segment par segment. Il est donc particulièrement efficace pour coder les images composées de zones étendues telles que les images de télévision.

Selon l'invention un procédé de codage et décodage d'une image, consistant à regrouper dans des zones des points connexes ayant une même propriété ; à décomposer ces zones en segments ; à coder chaque segment ; puis à décoder successivement chaque segment de chaque zone ; est caractérisé en ce que chaque point ayant la propriété considérée est attribué :

- à une zone nouvelle si le point voisin, dit point à gauche, le précédant immédiatement sur la même ligne et le point voisin, dit point au-dessus, qui est son homologue sur la ligne précédente, n'ont pas la propriété considérée ;

- à la zone du point à gauche si le point à gauche a cette propriété et le point au-dessus ne l'a pas ;

- à la zone du point au-dessus si le point au-dessus a cette propriété et le point à gauche ne l'a pas ;

- à la zone résultant de l'absorption de la zone du point à gauche par la zone du point au-dessus si :

    — les deux points voisins ont cette propriété,

    -- et leurs deux zones sont distinctes,

    -- et la zone du point à gauche n'a absorbé aucune zone précédemment ;

- à la zone résultant de l'absorption de la zone du point au-dessus par la zone du point à gauche si :

    — les deux points voisins ont cette propriété,

    -- et leurs deux zones sont distinctes,

—et la zone du point à gauche a absorbé au moins une zone précédemment,

— et la zone du point au-dessus n'a absorbé aucune zone précédemment ;

- à une zone commune au point à gauche et au point au-dessus si :

— ces deux points ont cette propriété,

— et ils appartiennent à une même zone

et consiste pour chaque zone :

- à indiquer quelle est cette propriété ;

- à décomposer la zone en segments parallèles et connexes ;

- à décoder un premier segment quelconque par trois valeurs définissant la position de ce segment dans l'image, et sa longueur ;

- à coder un $(k + 1)$ième segment ($k$ étant un entier supérieur à 1) par deux valeurs définissant sa position relativement à un $k$ième segment et par une valeur définissant sa longueur, le $k$ième segment étant un segment qui appartient à la zone considérée et qui a été codé immédiatement avant le $(k + 1)$ième segment, le $(k + 1)$ième segment étant choisi selon une règle de priorité fixée, parmi les segments connexes au $k$ième segment s'il y en a, sinon parmi les segments qui appartiennent à la zone considérée et n'ont pas encore été codés,

et en ce que pour restituer sa propriété à chaque point de l'image, le décodage consiste pour chaque zone :

- à déterminer les coordonnées de chaque point du premier segment, à partir des trois valeurs codant ce premier segment ;

- à déterminer successivement les coordonnées de chaque point de chaque $(k + 1)$ième segment de la zone considérée à partir des trois valeurs définissant sa longueur et définissant sa position par rapport au $k$ième segment, et à partir des coordonnées des points du $k$ième segment.

4

L'invention sera mieux comprise et d'autres caractéristiques apparaîtront à l'aide de la description ci-après et des figures s'y rapportant :

- la figure 1 représente l'ordre suivi pour déterminer les segments constituant une zone d'un exemple d'image ;

- la figure 2 représente l'ordre suivi pour coder et transmettre les données définissant ces segments ;

- la figure 3 représente le schéma synoptique d'un exemple de réalisation du dispositif de codage selon l'invention ;

- les figures 4 à 7 représentent des schémas synoptiques plus détaillés de parties du schéma synoptique de la figure 3 ;

- la figure 8 représente un chronogramme d'un exemple de réalisation des signaux d'horloge synchronisant le fonctionnement du dispositif de codage ;

- la figure 9 représente un exemple de zone d'une image, illustrant les symboles utilisés pour désigner les coordonnées des extrémités de segments ;

- les figures 10 à 15 représentent un organigramme de fonctionnement d'une partie de cet exemple de réalisation de dispositif de codage ;

- la figure 16 représente le schéma synoptique d'un exemple de réalisation du dispositif de décodage selon l'invention.

Le procédé objet de l'invention est applicable à toute image où chaque point peut être caractérisé par une propriété unique appartenant, à un ensemble fini de propriété, cette propriété est par exemple le fait d'avoir une valeur de luminance fixée, choisie parmi 256 valeurs discrètes. Il est applicable notamment au codage en temps réel d'une suite d'images de télévision. Dans d'autres exemples cette propriété peut être le fait d'être un point blanc ou un point noir, ou encore le fait d'être en mouvement ou immobile par rapport au point homologue de l'image précédente, ou encore le fait d'appartenir à un contour, c'est-à-dire d'avoir un fort gradient de luminance. L'image considérée dans la description ci-après est constituée par une trame d'une image de télévision où chaque point est représenté par une valeur binaire car il ne peut être que blanc ou noir. C'est un exemple qui ne limite en rien la portée de l'invention. Dans la suite les points auxquels la valeur binaire 1 est attribuée sont appelés points blancs et les points auxquels la valeur binaire 0 est attribuée sont appelés point noirs.

Le codage d'une telle image par le procédé selon l'invention consiste dans une première étape à regrouper les points blancs connexes dans des zones. Une deuxième étape consiste à coder ces zones de points blancs. Dans cet exemple les points noirs constituent le fond de l'image, il est inutile de déterminer des zones les regroupant puisqu'elles peuvent être déduites des zones de points blancs par complémentarité. Une troisième étape consiste à transmettre les données codées décrivant les zones de l'image.

Dans la première étape du procédé les points de toute une trame sont analysés par une caméra de télévision, puis ils sont traités successivement dans l'ordre où ils ont été analysés en attribuant chaque point à une zone de façon à regrouper dans une même zone les points blancs qui sont connexes. Pour chaque point il peut y avoir création ou expansion, ou disparition, d'une zone. Une disparition a lieu quand deux zones fusionnent parce qu'elles sont connexes. Chaque zone est désignée par un numéro, de valeur $Z_i$ par exemple, et est caractérisée par un vecteur d'état $\overrightarrow{E_{Z_i}}$ dont les composantes sont actualisées chaque fois qu'un point blanc est attribué à la zone.

Si la valeur binaire caractéristique d'un point est égale à 1 ce point est attribué à une zone dont le numéro est fonction des numéros de zone des points voisins. Le point voisin du point courant le précédant sur la même ligne est dit point à gauche, et le point voisin du point courant appartenant à la ligne immédiatement précédente est dit point au-dessus. Ces désignations correspondent au cas, le plus courant, où l'analyse de l'image est faite de haut en bas et de gauche à droite.

En outre la valeur du numéro de zone attribué à un point peut changer ultérieurement au cours du traitement d'autres points de la même trame à la suite du fusionnement de zones connexes. Par exemple si une zone de numéros $Z_i$ absorbe une zone de numéros $Z_h$ , la zone résultante est désignée par la valeur de numéro $Z_i$ et est caractérisée par un vecteur d'état $\overrightarrow{E_{Z_i\,\text{actualisé}}}$ dont la valeur des composantes est fonction de la valeur des composantes des vecteurs d'état $\overrightarrow{E_{Z_h}}$ et $\overrightarrow{E_{Z_i}}$ de la zone $Z_h$ et de l'ancienne zone $Z_i$. La valeur $Z_i$ est dite valeur actualisée du numéro de zone attribué aux points qui appartenaient à la zone de numéro $Z_h$. Le nouveau vecteur d'état, $\overrightarrow{E_{Z_i\,\text{actualisé}}}$ est dit vecteur d'état actualisé. Une mémoire dite mémoire d'adresses, établit une correspondance entre la valeur de numéro de zone qui a été attribuée à un point au moment où il était le point courant, et la valeur actualisée de ce numéro à un instant postérieur. Une mémoire, dite mémoire d'états, stocke les valeurs des composantes des vecteurs d'états de toutes les zones pendant la durée du traitement d'une trame. Pour simplifier la description et la mise en oeuvre du procédé, les domaines d'adressage de la mémoire d'états et de la mémoire d'adresses sont supposés identiques. Par exemple, si une zone de numéros $Z_w$ n'a jamais été absorbée la mémoire d'adresses contient la valeur $Z_w$ à l'adresse $Z_w$, et la mémoire d'états contient le vecteur d'état $\overrightarrow{E_{Z_w}}$ de cette zone à l'adresse de valeur $Z_w$. Par contre, dans l'exemple précédent, la mémoire d'adresses contient la valeur $Z_i$ à l'adresse $Z_h$, et la mémoire d'états contient les valeurs des composantes de $\overrightarrow{E_{Z_i\,\text{actualisé}}}$ à l'adresse de valeur $Z_i$. Ce sont les valeurs actualisées, des numéros de zone des points voisins du point courant, qui sont considérés pour déterminer la valeur du numéro de la zone à laquelle est attribué celui-ci.

Par convention, un numéro de zone unique et bien déterminé est attribué à tous les points noirs, bien qu'ils ne puissent pas toujours être regroupés dans un ensemble continu. Par exemple cette valeur peut être 0.

Les composantes du vecteur d'état $\overrightarrow{E_{Z_i}}$ sont les suivantes :

$x_o$, $y_o$ les coordonnées du premier point attribué à cette zone ; les coordonnées d'un point étant constituées respectivement par le rang de ce point sur sa ligne et par le rang de sa ligne dans sa trame,

$T_{Z_i}$, valeur d'un bit, dit indicateur d'absorption, prenant la valeur 1 quand la zone $Z_i$ a absorbé au moins une autre zone, et la valeur 0 dans le cas contraire,

$U_{Z_i}$, valeur d'un bit, dit indicateur de disparition, prenant la valeur 1 lorsque la zone $Z_i$ a été absorbée par une autre zone et prenant la valeur 0 dans le cas contraire.

Dans les cas où le nombre de propriétés que peut prendre un point est supérieur à 2, le vecteur d'état comporte une composante constituée par la valeur d'un numéro désignant la propriété commune à tous les points de la zone. Par exemple si la luminance des points peut prendre 256 valeurs discrètes, le vecteur d'état comporte un mot de 8 bits désignant une valeur de luminance.

Pour attribuer un point blanc à une zone et actualiser le vecteur d'états de cette zone quatre cas sont à distinguer :

Premier cas : le point à gauche du point courant et le point au dessus sont des points noirs. Le point courant n'étant connexe à aucune zone existante, il est attribué à une zone nouvelle de numéro $Z_d$ où $Z_d$ est une valeur d'adresse disponible dans la mémoire d'adresses et la mémoire d'états. La valeur $Z_d$ est inscrite à l'adresse de valeur $Z_d$ dans la mémoire d'adresses. Les coordonnées du point courant sont inscrites dans la mémoire d'états à l'adresse de valeur $Z_d$. La zone $Z_d$ étant nouvelle les indicateurs d'absorption et de disparition ont pour valeur : $T_{Z_d} = 0$ et $U_{Z_d} = 0$.

Deuxième cas : le point à gauche du point courant est un point blanc, le point au-dessus est un point noir, le point courant est donc connexe à un point appartenant à une zone Z définie antérieurement, il est alors attribuée à cette zone. Le contenu de la mémoire d'adresses et de la mémoire d'états est inchangé.

Troisième cas : les deux points voisins du point courant sont des points blancs et appartiennent à deux zones différentes, dont les valeurs

8

de numéros sont Z et Z'. Ces deux zones sont connexes par l'intermédiaire du point courant, il est donc possible de les réunir en une seule zone, à condition que cette réunion ne nécessite pas une cascade d'actualisations dans la mémoire d'adresses. La mémoire d'adresses ne permet en effet que de mémoriser l'absorption d'une première zone par une deuxième zone. Si une troisième zone absorbe la deuxième zone il est aisé de mémoriser dans la mémoire d'adresses que la troisième zone a absorbé la deuxième, mais il est malaisé de mémoriser que la première zone a aussi été absorbée indirectement par la troisième zone, c'est pourquoi de telles cascades d'absorptions sont à éviter. Trois variantes sont à distinguer selon que la zone du point à gauche et la zone du point au-dessus ont, ou n'ont pas déjà absorbé une zone. Le bit indicateur d'absorption accompagnant chaque vecteur d'état permet de distinguer ces différentes variantes.

a) Si la zone Z du point à gauche n'a jamais absorbé de zones $T_Z = 0$ elle est absorbée par la zone Z' du point au-dessus. La valeur du bit indicateur d'aborption $T_{Z'}$ de la zone du point au-dessus prend la valeur 1, et le bit indicateur de disparition $U_Z$ de la zone du point à gauche prend la valeur 1. La valeur Z' est inscrite à l'adresse de valeur Z dans la mémoire d'adresses, à la place de la valeur Z qui avait été inscrite lors de la création de la zone Z.

b) Si la zone du point à gauche a déjà absorbé une zone $(T_Z = 1)$ elle n'est pas absorbée afin d'éviter une cascade d'actualisations dans la mémoire d'adresses, deux sous-variantes sont à distinguer :

b1) Si la zone du point au-dessus n'a jamais absorbé de zone $(T_{Z'} = 0)$ elle est absorbée par la zone du point à gauche. Le bit indicateur de disparition de la zone du point au-dessus $U_{Z'}$ prend la valeur 1. Le bit indication d'absorption de la zone du point à gauche $T_Z$ prend la valeur 1. Dans la mémoire d'adresses la valeur Z est inscrite à l'adresse de valeur Z', à la place de la valeur Z' qui avait été inscrite lors de la création de la zone Z'.

b2) Si la zone Z' du point au-dessus a déjà absorbé au moins une zone $(T_{Z'} = 1)$, le fusionnement des deux zones n'est pas réalisé. Le point courant est attribué à la zone du point à gauche. Ces deux zones sont donc considérées comme disjointes alors qu'en fait elles sont connexes et auraient pu être fusionnées. Ce cas étant peu fréquent la perte d'efficacité de compression résultant du non fusionnement de ces deux zones n'est pas importante en pratique. Le contenu de la mémoire d'adresses et de la mémoire d'états est inchangé.

c) Le point au-dessus et le point à gauche sont des points blancs et appartiennent à une même zone, le point courant est alors attribué à cette zone. Le contenu de la mémoire d'adresses et de la mémoire d'états est inchangé.

Quatrième cas : le point à gauche du point courant est noir et le point au-dessus est blanc, le point courant est alors connexe à une zone Z' déjà existante, il est attribué à cette zone. Le contenu de la mémoire d'adresses et de la mémoire d'états est inchangé.

Le procédé selon l'invention ne se limite pas à l'utilisation de ce procédé pour regrouper dans des zones les points connexes ayant une propriété donnée, il est possible notamment de traiter différemment le troisième cas en prévoyant de réaliser une cascade d'actualisations dans la mémoire d'adresses au lieu d'éviter systématiquement les fusionnements de zones nécessitant de telles cascades.

Après la détermination de toutes les zones d'une trame, la seconde étape du codage consiste à décomposer successivement chacune des zones en segments parallèles et connexes entre eux, à déterminer les caractéristiques de ces segments, puis à les transmettre sous une forme codée nécessitant un faible débit. Les zones sont traitées successivement dans l'ordre défini par leur numéro, qui n'est pas forcément l'ordre dans lequel les zones ont été analysées dans l'image. Les segments sont décrits en déterminant les valeurs des coordonnées absolues de leurs deux extrémités puis ils sont codés, mais ils ne sont pas toujours codés immédiatement après, car l'ordre où ils sont codés et transmis n'est pas forcément l'ordre où ils sont décrits.

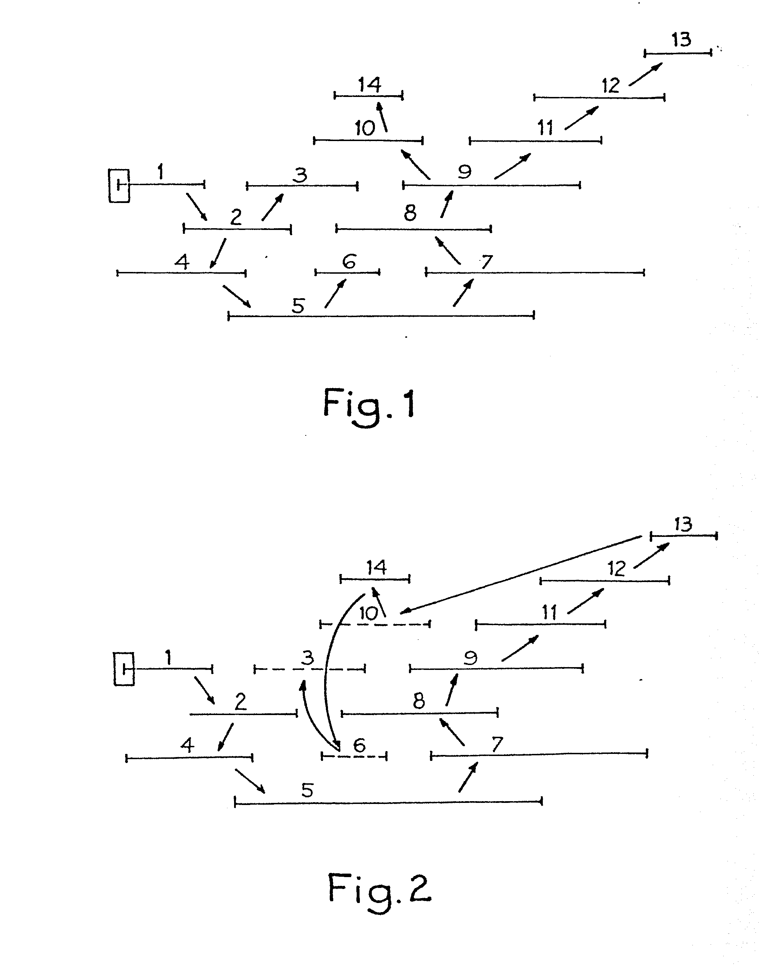

La figure 1 représente un exemple de zone décomposée en segments, et où le premier point attribué est le point représenté par un petit carré, ce point est dit point de référence. Le point de référence est toujours un point ayant donné lieu à la création d'une zone, par conséquent il est toujours situé au début d'un segment. Dans cet exemple c'est le segment 1 et ce segment est appelé premier segment de la zone. Dans chaque zone le premier segment est codé différemment des autres segments. Il est codé par la valeur des coordonnées absolues de son premier point, le dit premier point étant le point d'abscisse la plus faible dans le segment, et par sa longueur. Les autres segments constituant la zone considérée sont décrits en déterminant les coordonnées absolues de leurs deux extrémités, puis il sont codés différentiellement en calculant les coordonnées relatives du premier point d'un (k + 1) ième segment par rapport au premier point d'un k ième segment qui a été codé et transmis immédiatement auparavant, et par leur longueur (k entier supérieur à 1). Ils sont codés et transmis dans un ordre déterminé selon une règle de priorité fixée.

Après avoir codé le segment 1, qui est le segment de référence dans l'exemple considéré, la valeur des coordonnées absolues de son premier point et la valeur de sa longueur sont codées et transmises. Puis le procédé consiste à rechercher tous les segments connexes au segment 1, à les décrire, à coder et transmettre les données décrivant un seul de ces segments, et à stocker les données décrivant les autres. Les données transmises sont en outre codées par un code de Huffmann pour réduire le débit d'information. Dans cet exemple il n'y a qu'un segment connexe au segment 1 dans la zone considérée, c'est le segment 2. La description du segment 2 consiste à déterminer les coordonnées absolues de ses points extrêmes. Le codage consiste à en déduire les coordonnées relatives de son premier point par rapport au premier point du segment 1, et sa longueur. Ces données sont transmises, puis le procédé consiste à rechercher dans la zone considérée, et à décrire, tous les segments connexes au segment 2 et qui n'ont pas encore été décrits. Dans cet exemple il y a les segments 3 et 4. La description de chacun de ces segments consiste à déterminer les coordonnées absolues de leurs points extrêmes. Seules les données décrivant le segment 4 sont codées et transmises. Le codage consiste à calculer les coordonnées relatives du premier point par rapport au premier point du segment 2 et sa longueur. Les données codées décrivant le segment 4 sont transmises et les données non codées décrivant le segment 3 sont stockées dans une mémoire pile.

Les données décrivant le segment 3 sont mises en attente car la priorité est donnée ensuite à la transmission de données définissant un des segments connexes au segment 4, de façon à transmettre une suite de données correspondant à des segments successivement connexes les uns avec les autres. Le choix entre les segments 3 et 4, connexes au segment 2, est fait selon une règle de priorité fixe mais arbitraire. Dans cet exemple les segments connexes situés sur la ligne au-dessus sont prioritaires par rapport aux segments situés sur la ligne en dessous, et le segment dont le premier point a l'abscisse la plus élevée est prioritaire par rapport aux autres segments connexes sur la même ligne.

Sur la figure 1 les flèches indiquent l'ordre de description des segments dans cet exemple.

La figure 2 représente le même exemple d'une zone d'une image, avec des flèches indiquant l'ordre de codage et transmission des données. Les segments en pointillés sont ceux pour lesquels les données sont stockées dans la mémoire pile, en attendant de pouvoir être codées et transmises.

Le procédé consiste ensuite à rechercher et à décrire tous les segments de la zone considérée qui sont connexes au segment 4. Il n'y en a qu'un, le segment 5. Il est décrit comme précédemment et les données obtenues sont codées et transmises. Puis sont recherchés tous les segments de la zone considérée qui sont connexes au segment 5. Dans cet exemple il y en a deux, les segments 6 et 7, qui sont situés sur la ligne au-dessus de la ligne du segment 5. Il sont décrits comme précédemment et les données décrivant le segment 7 sont codées et transmises alors que les données décrivant le segment 6 sont stockées dans la mémoire pile. Dans un tel cas la priorité de transmission est donnée au segment 7 dont le premier point a une valeur d'abcisse plus élevée que celle du premier point du segment 6. Ensuite le procédé consiste à rechercher les segments de la zone considérée qui sont connexes au segment 7 et qui n'ont pas encore été décrits. Seul le segment 8 est dans ce cas, il est décrit puis les données sont codées et transmises. Ensuite sont recherchés les segments qui sont connexes au segment 8 et qui n'ont pas encore été décrits. Seul le segment 9 est dans ce cas, il est alors décrit et les données sont codées et transmises. Ensuite sont recherchés les segments connexes au segment 9 et qui n'ont pas été décrits. Il y en a deux, les segments 10 et 11. Il sont décrits, puis les données décrivant le segment 11 sont codées et transmises et les données décrivant le segment 10 sont stockées dans la mémoire pile. La règle de priorité de transmission est toujours la même, le segment 11 est transmis parce que l'abscisse de son premier point est plus élevée que l'abscisse du premier point du segment 10. Ensuite sont recherchés les segments, appartenant à la zone considérée, qui sont connexes au segment 11 et qui n'ont pas encore été décrits. Seul le segment 12 remplit ces conditions, il est décrit puis les données sont codées et transmises. Ensuite sont recherchés les segments qui appartiennent à la zone considérée, qui n'ont pas encore été décrits, et qui sont connexes au segment 12. Seul le segment 13 remplit ces conditions, il est décrit puis les données sont codées et transmises. Ensuite sont recherchés les segments qui appartiennent à la zone considérée, qui n'ont pas encore été décrits, et qui sont connexes au segment 13. Aucun segment ne remplit ces conditions, les données codées et transmises alors sont celles stockées en dernier dans la mémoire pile, c'est-à-dire les données décrivant le segment 10.

Contenu de la mémoire pile :
$$\begin{vmatrix} 10 \\ 6 \\ 3 \end{vmatrix}$$

Il est à remarquer que dans ce cas le segment 10 est codé différentiellement par rapport au segment 13 qui n'est pas connexe.

Le procédé consiste ensuite à rechercher quels sont les segments de la zone considérée qui sont connexes au segment 10 et qui n'ont pas encore été décrits. Il n'y en a qu'un, le segment 14. Celui-ci est décrit et les données sont codées et transmises sans attendre dans la mémoire pile. Ensuite sont recherchés les segments de la zone considérée qui sont connexes au segment 14 et n'ont pas encore été décrits. Il n'y en a aucun, les données codées et transmises alors sont les données disponibles sur la sortie de la mémoire pile, c'est-à-dire les données décrivant le segment 6. Cette fois encore un segment, 6, est codé différentiellement par rapport à un segment, 14, qui ne lui est pas connexe. Ensuite sont recherchés les segments de la zone considérée qui sont connexes au segment 6 et qui n'ont pas encore été décrits. Il n'y en a aucun, les données codées et transmises sont les données disponibles sur la sortie de la mémoire pile, qui décrivent le segment 3. Ensuite sont recherchés les segments appartenant à la zone considérée, qui sont connexes au segment 3 et qui n'ont pas encore été décrits. Il n'y en a pas et d'autre part la mémoire pile est vide. Le codage de la zone considérée est alors terminé.

13

Comme il apparaît sur la figure 2 les segments 1, 2, 4, 5, 7, 8, 9, 11, 12, 13, qui sont successivement transmis, sont connexes l'un par rapport au précèdent et par rapport au suivant, la corrélation entre leurs caractéristiques est donc élevée ce qui permet de réduire la quantité d'informations par la transmission des coordonnées relatives et non des coordonnées absolues du premier point de chaque segment.

Le numéro de la prochaine zone à coder est déterminé en lisant séquentiellement le contenu de la mémoire d'états et en testant pour chaque vecteur d'état la valeur du bit indicateur de disparition. Les zones ayant été absorbées ne doivent pas être codées puisqu'elles sont incluses dans les zones restantes. La mémoire d'états est initialisée en donnant des valeurs 1 aux bits indicateurs de disparition, afin que les adresses non utilisées de cette mémoire ne soient pas prises en compte pour le codage des zones.

Les données sont transmises après un codage par un code de Huffmann propre à chaque type de données. Dans un exemple de réalisation les coordonnées du premier point du premier segment d'une zone ne sont pas codées par un code de Huffmann et sont transmises sous la forme de deux mots de 9 bits ; sa longueur est codée par un code de Huffmann et est transmise sous la forme d'un mot de 3,5 bits en moyenne. Les coordonnées relatives du premier point de chacun des autres segments sont codées et transmises sous la forme d'un mot de 3,5 bits en moyenne pour l'abscisse, d'un mot de 1,5 bits en moyenne pour l'ordonnée, et sa longueur sous la forme d'un mot de 3,5 bits en moyenne. Pour séparer les données correspondant à chaque zone un drapeau est inséré entre les données correspondant à deux zones successives. Un drapeau du type classique HDLC peut être utilisé par exemple. Un mot binaire suit le drapeau pour indiquer la propriété commune à tous les points de la zone lorsque le nombre de propriété est supérieur à 2. Dans le cas d'une transmission d'une suite d'images de télévision sur une voie dont le débit binaire est fixé, il est nécessaire de prévoir une mémoire tampon permettant de régulariser le débit des données.

Dans cet exemple le décodage a pour but de fournir une valeur binaire pour chaque point de l'image à restituer, et cette valeur binaire est stockée dans une mémoire d'image analogue à celle utilisée pour le codage, c'est-à-dire ayant une capacité correspondant à une trame. Le décodage consiste d'abord à détecter les drapeaux HDLC annonçant les paquets de données correspondant aux zones, et à éliminer les bits de valeur 0 rajoutés par la procédure de codage HDLC. Les valeurs binaires des différents types de données sont déterminées par un décodage inverse du codage de Huffmann employé avant la transmission. La restitution des valeurs binaires correspondant aux points d'une zone consiste d'abord à déterminer successivement quels sont les points appartenant à chaque segment de la zone considérée. Les coordonnées absolues de ces points sont calculées à partir des coordonnées absolues du premier point du segment considéré et à partir de la valeur de sa longueur. Les coordonnées absolues du premier point du premier segment de la zone sont connues sans avoir à effectuer de décodage de Huffmann. Les coordonnées absolues du premier point du deuxième segment sont calculées à partir des coordonnées relatives de ce point. La valeur de la longueur du deuxième segment permet de calculer les coordonnées absolues de tous les autres points de ce deuxième segment. Les coordonnées absolues du premier point du (k + 1) ième segment sont calculées à partir des coordonnées absolues du premier point du k ième segment et des coordonnées relatives du premier point du (k + 1) ième segment. Les coordonnées absolues des autres points du (k + 1) ième segment sont calculées à partir des coordonnées absolues du premier point et de la valeur de la longueur du (k + 1) ième segment. Dans la suite le k ième segment, qui va servir de référence pour le codage d'un (k + 1) ième segment, est appelé segment courant. Le processus est le même pour tous les autres segments jusqu'à la détection du prochain drapeau HDLC indiquant que la zone considérée est terminée. Au fur et à mesure du décodage, les coordonnées absolues des points des segments permettent d'adresser la mémoire d'image pour y stocker la valeur binaire 1 attribuée aux points repérés par ces coordonnées. Le décodage est réalisé dans l'ordre de transmission, par conséquent il correspond aux flèches tracées sur la figure 2.

L'invention ne se limite pas à la règle de priorité décrite ci-dessus pour le choix du segment connexe qui est transmis et de ceux qui sont stockés. Il suffit que le segment transmis soit connexe avec le segment précédemment transmis pour qu'il y ait une forte corrélation entre leurs

caractéristiques, le (k + l)ième segment traité doit donc être choisi en priorité parmi les segments connexes au k ième segment traité.

L'invention ne se limite pas non plus à l'utilisation d'une mémoire pile pour le stockage des données en attente. Il est possible d'utiliser aussi une mémoire tampon restituant en premier les données stockées en premier.

Pour une image à deux teintes seulement la quantité d'information, après compression selon ce procédé, est réduite à 1,5 bits, en moyenne, pour chaque point blanc (seuls les points blancs sont transmis).

Une certaine amélioration du taux de compression peut être obtenue en codant différentiellement la valeur de la longueur de chaque segment, excepté le premier, par rapport à la longueur du segment codé immédiatement auparavant. La grandeur de l'amélioration dépend du type des images à coder.

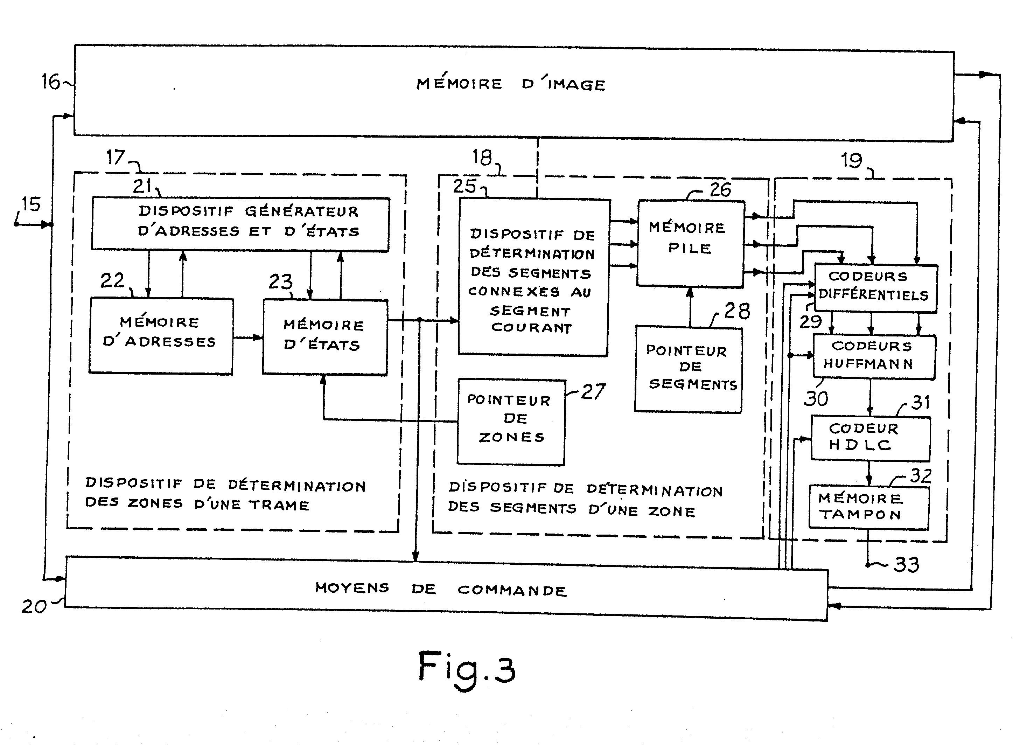

La figure 3 représente le schéma synoptique d'un exemple de réalisation du dispositif de codage selon l'invention. Une borne d'entrée 15 reçoit un signal logique résultant de l'analyse d'une image ne comportant que des points noirs et des points blancs. Ce signal binaire est fourni d'une part à une mémoire vive 16, dite mémoire d'image, qui stocke un bit par point, et d'autre part à une première entrée de moyens de commande 20. Le dispositif de codage comporte en outre un dispositif 17 de détermination des zones d'une trame, un dispositif 18 de détermination des segments d'une zone, un dispositif 19 de codage et de transmission, et une borne de sortie 33. Au cours de la première phase du procédé de codage la mémoire d'image 16 stocke les valeurs binaires correspondant à une trame de l'image et le dispositif 17 détermine en temps réel les zones constituant cette trame. La deuxième étape du procédé de codage est réalisée par le dispositif 18 pendant l'intervalle de temps séparant deux trames successives. Le dispositif 18 détermine les coordonnées absolues des extrémités des segments constituant chaque zone successivement. Le dispositif 19 comporte trois codeurs différentiels 29, trois codeurs de Huffmann 30, un codeur HDLC 31, et une mémoire tampon 32. Les codeurs différentiels 29 déterminent les coordonnées relatives des extrémités des segments et leur longueur, puis ces données sont codées par les codeurs de Huffmann 30, puis le codeur HDLC 31 insère un drapeau HDLC entre les paquets de données correspondant aux zones, et enfin ces données sont stockées dans la mémoire tampon 32 et sont transmises par la borne de sortie 33. Deux sorties des moyens de commande 20 sont reliées respectivement à deux entrées de commande des codeurs différentiels 29 pour leur fournir respectivement un signal FS validant les données fournies par le dispositif 18, et un signal PS inhibant le fonctionnement du codeur différentiel pour ne pas coder les coordonnées absolues du premier point du premier segment de chaque zone. Le signal PS est appliqué aussi à une entrée commune aux trois codeurs de Huffmann 30 pour inhiber le fonctionnement de deux d'entre eux de façon à transmettre sans codage les valeurs des coordonnées absolues du premier point du premier segment de chaque zone. Une sortie des moyens de commande 20 est reliée à une entrée de commande du codeur HDLC 31 pour lui fournir un signal logique FZ lui indiquant la fin du traitement de chaque zone.

Dans une variante de réalisation où la longueur de chaque (k + 1) ième segment serait codée différentiellement par rapport à la longueur du k ième segment, pour k entier supérieur à 1, un quatrième codeur différentiel serait adjoint aux trois codeurs différentiels 29. Dans le cas où le nombre de propriétés que peut prendre chaque point serait supérieur à 2, le dispositif 19 de codage et de transmission comporterait des moyens pour transmettre avec chaque paquet de données correspondant à une zone un mot binaire désignant la propriété commune à tous les points de la zone considérée. La réalisation de ce type de codeur est classique et à la portée de l'homme de l'art.

Le dispositif 17 de détermination des zones d'une trame comporte principalement un dispositif 21, dit générateur d'adresses et d'états, une mémoire vive 22, dite mémoire d'adresses, et une mémoire vive 23, dite mémoire d'états. Le dispositif 21 générateur d'adresses et d'états fournit pour chaque point de l'image une valeur d'adresse qui constitue le numéro de la zone à laquelle est attribué le point courant, et actualise les composantes du vecteur d'état des zones au fur et à mesure des créations et des disparitions de zones. La mémoire d'états 23 stocke la valeur des composantes des vecteurs d'états de toutes les zones d'une trame. La mémoire d'adresses 22 fait correspondre à chaque valeur de numéro de zone une autre valeur, identique si la zone n'a pas été absorbée, ou différente si la zone a été absorbée. Dans la description ci-dessous la valeur d'adresse constituant le numéro de zone attribué au point courant (n, j) est notée $AD_n^j$. La valeur d'adresse constituant la valeur du numéro de zone du point au-dessus (n, j-1), au moment où ce point est attribué, est notée $AD_n^{j-1}$. La valeur d'adresse constituant la valeur du numéro de zone du point à gauche (n-1, j) au moment où ce point est attribué, est notée $AD_{n-1}^j$. Les valeurs d'adresse constituant les valeurs actualisées du numéro de zone du point à gauche et du point au-dessus, au moment où ces valeurs sont utilisées pour déterminer $AD_n^j$, sont notées respectivement $AD_z$ et $AD_{z'}$.

Le dispositif 18 de détermination des segments d'une zone comporte principalement un dispositif 25 de détermination des segments connexes au segment courant, une mémoire pile 26, un pointeur de segments 28, et un pointeur de zones 27. Le pointeur de zones 27 possède une sortie fournissant une adresse de lecture à la mémoire d'états 23 pour lire la valeur des composantes des vecteurs d'états de chaque zone successivement au cours de la deuxième étape du procédé de codage. Le dispositif 25 possède une entrée multiple reliée à une sortie multiple de données de la mémoire d'états 23 pour recevoir la valeur des composantes du vecteur d'état d'une zone, c'est-à-dire les coordonnées du premier point attribué à cette zone et la valeur du bit indicateur d'absorption et du bit indicateur de disparition. Le dispositif 25 possède une sortie multiple reliée à une entrée multiple de données de la mémoire pile 26 pour y stocker la valeur des coordonnées absolues des extrémités et la valeur de la longueur des segments connexes au segment courant. La mémoire pile 26 possède une entrée d'adresses reliée à la sortie du pointeur de segments 28, et une sortie multiple reliée aux entrées des codeurs différentiels 29 du dispositif 19 de codage et de transmission. Les moyens de commande 20 possèdent une deuxième entrée reliée à la sortie de données de la mémoire d'états 23 pour recevoir la valeur des bits indicateurs du vecteur d'état d'une zone, une troisième entrée reliée à une sortie de données de la mémoire d'image 16, et une sortie multiple reliée à des entrées de commande de la mémoire d'image 16. Les moyens de commande 20 fournissent des signaux d'horloge pour synchroniser le fonctionnement de l'ensemble du dispositif de codage, et des signaux de commande qui adaptent ce fonctionnement en fonction des différents cas rencontrés pendant la détermination des zones d'une trame et pendant la détermination des segments de chaque zone.

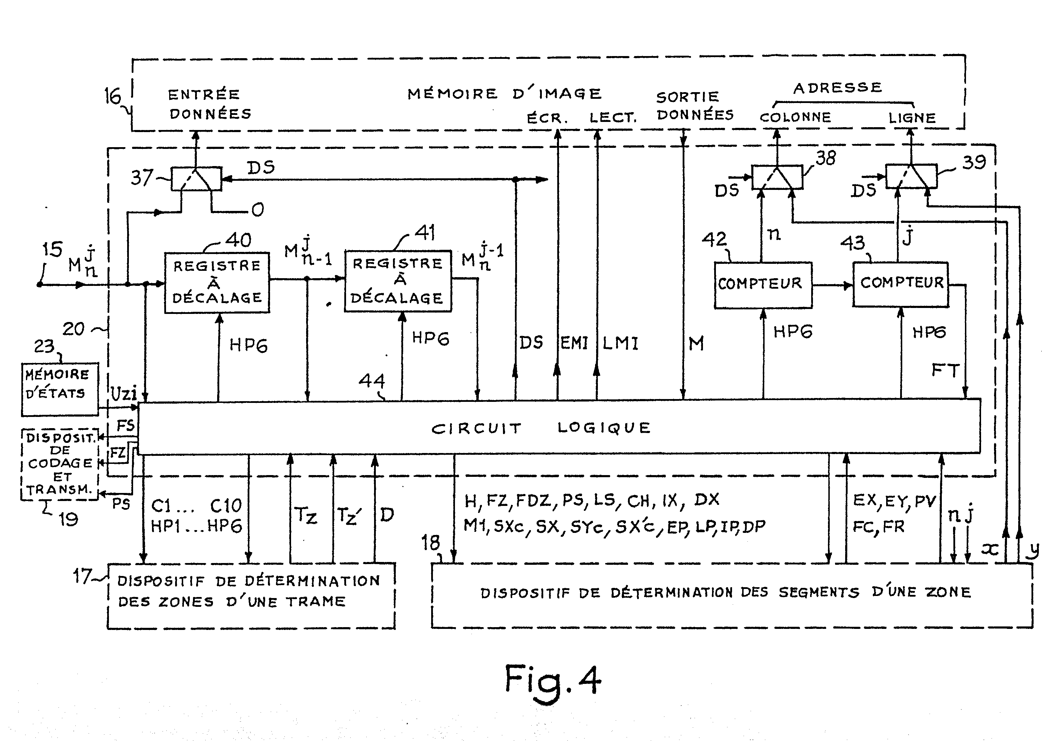

La figure 4 représente le schéma synoptique d'un exemple de réalisation des moyens de commande 20 et leurs liaisons avec la mémoire d'image 16, avec le dispositif 17 de détermination des zones d'une trame, et avec le dispositif 18 de détermination des segments d'une zone. Les moyens de commande 20 comportent trois multiplexeurs 37, 38, et 39 à deux entrées et une sortie, un premier registre à décalage 40, un deuxième registre à décalage 41, un premier compteur 42, un deuxième compteur 43, et un circuit logique 44. Chacun des multiplexeurs 37, 38, et 39 est équivalent à un commutateur à un circuit et deux positions, reliant une première entrée à la sortie dans sa première position et reliant une deuxième entrée à la sortie dans sa deuxième position. La première position est représentée en traits pleins, et la deuxième position en pointillés. La première entrée des moyens de commande 20 est reliée d'une part à la borne d'entrée 15 et d'autre part à la deuxième entrée du multiplexeur 37, à une entrée du registre à décalage 40 et à une entrée du circuit logique 44. La première entrée du multiplexeur 37 reçoit en permanence un signal logique de valeur 0, et la sortie du multiplexeur 37 est reliée à une entrée de données de la mémoire d'image 16. La sortie du registre à décalage 40 est reliée à une entrée du circuit logique 44 et à une entrée du registre à décalage 41. La sortie du registre à décalage 41 est reliée à une entrée du circuit logique 44. Les registres 40 et 41 possèdent chacun une entrée de commande recevant un signal d'horloge HP6 fourni par le circuit logique 44. Le multiplexeur 37 possède une entrée de commande reliée à une sortie du circuit logique 44 pour recevoir un signal de commande DS qui le commute dans sa première position pendant toute la durée de la détermination des segments de toutes les zones d'une trame. Les sorties des multiplexeurs 38 et 39 sont reliées respectivement à une première et une deuxième entrée d'adresses de la mémoire d'image 16 qui correspondent respectivement au rang de la colonne et au rang de la ligne d'un point de l'image. Les multiplexeurs 38 et 39 sont commandés par le signal DS qui les met dans leur première position pendant la détermination des segments de toutes les zones d'une trame. Les compteurs 42 et 43 possèdent chacun une sortie reliée respectivement aux deuxièmes entrées des multiplexeurs 38 et 39 pour leur fournir respectivement une valeur n et une valeur j. Les premières entrées des multiplexeurs 38 et 39 sont reliées respectivement à deux sorties du dispositif 18 fournissant respectivement deux valeurs, x et y. Les compteurs 42 et 43 possèdent chacun une entrée d'horloge recevant un signal d'horloge HP6, et une sortie fournissant un signal logique FT quand le comptage a atteint une valeur maximale donnée, cette sortie du compteur 42 est reliée à une entrée de validation du compteur 43, et cette sortie du compteur 43 est reliée à une entrée du circuit logique 44 pour lui fournir un signal FT. Les valeurs n et j sont fournies aussi à deux entrées du dispositif 17 de détermination des zones d'une trame. Une sortie de données de la mémoire d'image 16 fournit une valeur binaire M à une entrée du circuit logique 44. Deux sorties du circuit logique 44 fournissent respectivement des signaux logiques EMI et LMI à une entrée de commande d'écriture et une entrée de commande de lecture de la mémoire d'image 16. Une sortie multiple du circuit logique 44 fournit au dispositif 17 de détermination des zones d'une trame des signaux de commande C1..., C10, des signaux d'horloge HP1..., HP6. Une entrée multiple du circuit logique 44 reçoit des signaux logiques $T_Z$ , $T_{Z'}$ , D, fournis par le dispositif 17. Une sortie multiple du circuit logique 44 fournit des signaux de commande FZ, FDZ, PS, LS, CH, IX, DX, M1, $SX_c$ $SY_c$, $SX'_c$, EP, LP, IP, DP, et un signal d'horloge H, au dispositif 18. Une entrée multiple du circuit logique 44 reçoit des signaux de commande EX, EY, PV, FC, FR fournis par le dispositif 18. Une sortie du circuit logique 44 fournit les signaux FS, FZ, et PS au dispositif 19 de codage et de transmission. Une entrée du circuit logique 44 reçoit un signal de valeur $U_{Z_i}$ fourni par la mémoire d'états 23, pour indiquer si la zone de numéro $Z_i$ est une zone qui existe encore, et donc qui peut être codée.

Pendant l'analyse d'une trame la borne d'entrée 15 reçoit pour chaque point de coordonnées (n, j), un signal logique de valeur $M_n^j$ égale à 1 pour un point blanc et égale à 0 pour un point noir. La valeur $M_n^j$ est acheminée par le multiplexeur 37 à l'entrée de données de la mémoire d'image 16 où elle est inscrite sous l'action du signal EMI fourni par le circuit logique 44, à l'adresse (n, j) fournie par les compteurs 42 et 43 et acheminée par les multiplexeurs 38 et 39. Le nombre maximal compté par le compteur 42 correspond au nombre de points par ligne, et le nombre maximal compté par le compteur 43 correspond au nombre de lignes dans une trame, le signal FT fourni par le compteur 43 indique la fin d'une trame. Par ailleurs, la valeur $M_n^j$ est stockée dans les registres à décalage 40 et 41 et est décalée à chaque impulsion d'horloge HP6 jusqu'à la sortie du registre à décalage 41. A l'instant où commence l'attribution du point de coordonnées (n, j) à une zone, la valeur $M_n^j$ est présente à l'entrée du registre à décalage 40, la valeur $M_{n-1}^j$ correspondant au point voisin à gauche est présente à la sortie du registre à décalage 40, et la valeur $M_n^{j-1}$, correspondant au point voisin au-dessus, est présente à la sortie du registre à décalage 41. La capacité du registre à décalage 40 correspond à un point et la capacité du registre à décalage 41 correspond à une ligne moins un point. Les valeurs $M_n^j$, $M_{n-1}^j$ et $M_n^{j-1}$ sont fournies au circuit logique 44 pour élaborer les signaux de commande C1...,C10, pour la détermination du numéro de zone à attribuer au point courant en fonction des caractéristiques des points voisins. Quand le circuit logique 44 reçoit le signal logique FT la détermination des zones d'une trame est terminée, la détermination des segments de chaque zone commence. Pendant cette deuxième partie du traitement d'une trame les signaux d'horloge HP1,..., HP6 sont inhibés, le signal d'horloge H est généré, et le circuit logique 44 fournit le signal logique DS qui met les multiplexeurs 37, 38, et 39 dans leur première position. L'entrée de données de la mémoire d'image 16 reçoit une valeur 0 constante, la première entrée d'adresses reçoit la valeur x et la deuxième entrée d'adresses reçoit la valeur y. Chaque fois qu'une lecture est effectuée dans la mémoire d'image 16 le circuit logique 44 fournit un signal LMI à l'entrée de commande de lecture de la mémoire d'image, celle-ci fournit au circuit logique 44 une valeur M correspondant au point de coordonnées (x, y), puis le circuit logique 44 fournit un signal EMI à l'entrée de commande d'écriture de la mémoire d'image 16, une valeur 0 s'inscrit donc à l'adresse (x, y) à la place de la valeur 0 ou 1 de vient d'être lue, pour effacer toute valeur 1 qui a été traitée. La fin du codage d'une trame est indiquée au circuit logique 44 par le signal FC fourni par le dispositif 18 lorsque le codage de toutes les zones est terminé.

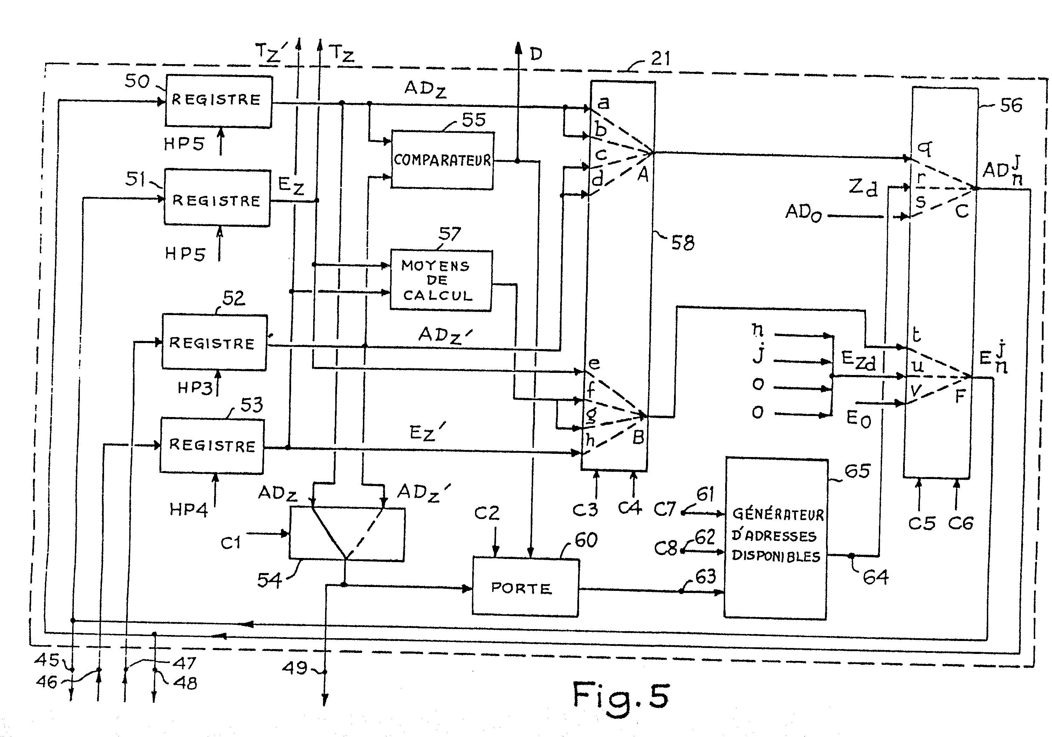

La figure 5 représente le schéma synoptique d'un exemple de réalisation du dispositif 21 générateur d'adresses et d'états. Il comporte quatre registres 50, 51, 52 et 53, un multiplexeur 54 à deux entrées et une sortie, un comparateur numérique 55, un multiplexeur 56 à six entrées et deux sorties, un multiplexeur 58 à huit entrées et deux sorties, un dispositif 65 dit générateur d'adresses disponibles, et une porte 60. Le multiplexeur 58 est équivalent à un commutateur à deux circuits et quatre positions, une sortie A et une sortie B étant reliées respectivement à des entrées a, b, c, d et e, f, g, l, dans la première, deuxième, troisième et quatrième position. Il possède deux entrées de commande recevant des signaux logiques de valeurs C3 et C4 fournis par le circuit logique 44 des moyens de commande 20. Le multiplexeur 56 est équivalent à un commutateur à deux circuits et trois positions, une sortie C et une sortie F étant reliées respectivement à des entrées q, r, s, et t, u, v, dans la première, deuxième et troisième position. Le multiplexeur 56 possède deux entrées de commande recevant respectivement des signaux logiques de valeurs C5, C6, fournis par le circuit logique 44. Le multiplexeur 54 est équivalent à un commutateur à un circuit à deux positions, une première entrée étant reliée à sa sortie dans la première position et une deuxième entrée étant reliée à sa sortie dans la deuxième position. Il possède une entrée de commande recevant le signal logique de valeur CI fourni par le circuit logique 44. Chacun des registres 50, 51, 52, et 53 permet de stocker une valeur numérique, et est commandé par une entrée de commande recevant respectivement un signal d'horloge HP5, HP5, HP3, HP4. Une entrée du registre 50 est reliée d'une part à la sortie C du multiplexeur 56 et à une borne de sortie 48 du dispositif 21. Une entrée du registre 51 est reliée d'une part à la sortie F du multiplexeur 56 et d'autre part à une borne de sortie 45 du dispositif 21. Une entrée du registre 52 et une entrée du registre 53 sont reliées respectivement à une borne d'entrée 47 et à une borne d'entrée 46 du dispositif 21. Une sortie du registre 50 est reliée aux entrées a et b du multiplexeur 58, à une première entrée du comparateur 55, et à la première entrée du multiplexeur 54. Une sortie du registre 51 est reliée d'une part à une entrée du circuit logique 44 pour lui fournir un signal logique de valeur $T_Z$, et d'autre part à une première entrée de moyens de calcul 57 et à l'entrée e du multiplexeur 58. Une sortie du registre 52 est reliée à une deuxième entrée du comparateur 55, aux entrées c et d du multiplexeur 58, et à la deuxième entrée du multiplexeur 54. Une sortie du registre 53 est reliée d'une part à une entrée du circuit logique 44 des moyens de commande 20 pour lui fournir un signal logique de valeur $T_{Z'}$ , et d'autre part à une deuxième entrée des moyens de calcul 57 et à l'entrée l du multiplexeur 58. Pendant l'attribution d'un point courant à une zone les registres 50, 51, 52, 53 stockent respectivement les valeurs $AD_Z$, $E_Z$, $AD_{Z'}$ , et $E_{Z'}$ ; $AD_Z$ et $AD_{Z'}$ étant les valeurs d'adresse qui constituent les valeurs actualisées des numéros de zone du point à gauche et du point au-dessus du point courant ; $E_Z$ et $E_{Z'}$ étant des valeurs numériques constituées de la valeur actualisée des composantes du vecteur d'état de la zone du point à gauche et de la zone du point au-dessus respectivement. Les valeurs de numéros de zone, $AD_Z$ et $AD_{Z'}$ , sont des valeurs actualisées qui ne sont définitives que lorsque tous les points de la trame ont été attribués à des zones. Ces valeurs peuvent être différentes des valeurs de numéro de zone $AD_{n-1}^j$ et $AD_n^j$ qui étaient valables aux instants où le point à gauche et le point au-dessus étaient attribués. Une sortie du comparateur 55 est reliée à une entrée du circuit logique 44 pour lui fournir un signal logique de valeur D = 1 lorsque les valeurs $AD_Z$ et $AD_{Z'}$ appliquées sur ses entrées sont différentes. Une sortie des moyens de calcul 57 est reliée aux entrées f et g du multiplexeur 58. Les sorties A et B du multiplexeur 58 sont reliées respectivement aux entrées q et t du multiplexeur 56. Une borne de sortie 64 du pointeur d'adresses disponibles 65 est reliée à l'entrée r du multiplexeur 56 et lui fournit une valeur d'adresses $Z_d$. L'entrée s du multiplexeur 56 reçoit une valeur d'adresse constante $AD_0$. L'entrée u du multiplexeur 56 reçoit la valeur $E_{Z_d}$ = (n, j, 0, 0), des composantes d'un vecteur d'état $\overrightarrow{E_{Z_d}}$ ; les valeurs n et j étant fournies par les compteurs 42 et 43 des moyens de commande 20. L'entrée v du multiplexeur 56 reçoit la valeur $E_0$ = (0,0,0,1) des composantes d'un vecteur d'état constant $\overrightarrow{E_0}$. Le générateur d'adresses disponibles 65 possède deux bornes d'entrée de commande 61 et 62 recevant respectivement les signaux logiques C7 et C8. Une borne d'entrée 63 du générateur d'adresses disponibles 65 est reliée par la porte 60 à la sortie du multiplexeur 54, sortie qui est reliée en outre à une borne de sortie 49 du dispositif 21. La porte 60 possède deux entrées de commande recevant respectivement le signal D fourni par la comparateur 55 et le signal C2.

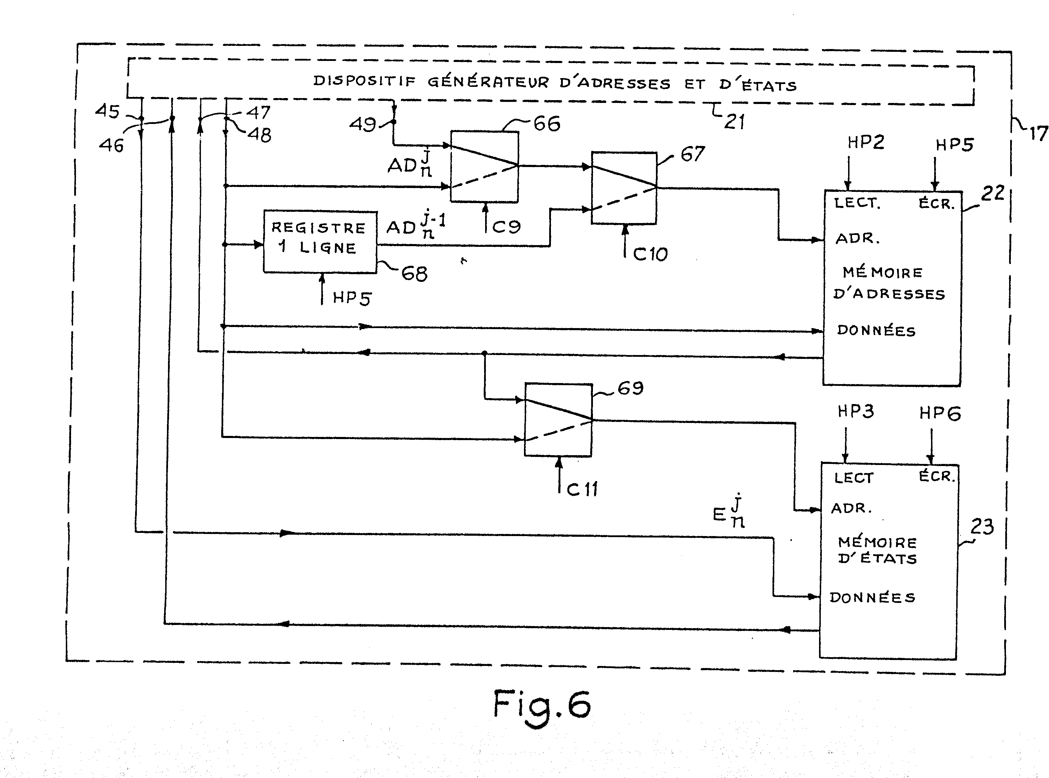

La figure 6 représente le schéma synoptique d'un exemple de réalisation de la mémoire d'adresses 22, de la mémoire d'états 23, et des éléments les reliant au dispositif 21 générateur d'adresses et d'états pour constituer le dispositif 17 de détermination des zones d'une trame. Ces éléments de liaison comportent trois multiplexeurs à deux entrées et une sortie 66, 67, et 69, et un registre à décalage 68 de capacité correspondant à une ligne d'image. Chacun de ces multiplexeurs est équivalent à un commutateur ayant un circuit à deux positions, reliant une première entrée à la sortie dans la première position et reliant une deuxième entrée à la sortie dans la deuxième position, respectivement sous l'action des signaux de commande de valeur C9, C10, C11. La borne de sortie 45 et la borne d'entrée 46 du dispositif 21 sont reliées respectivement à une entrée et à une sortie de données de la mémoire d'états 23. La borne d'entrée 47 et la borne de sortie 48 du dispositif 21 sont reliées respectivement à une sortie et à une entrée de données de la mémoire d'adresses 22. La sortie de données de la mémoire 22 est reliée à la première entrée du multiplexeur 69. La borne de sortie 48 du dispositif 21 est reliée à la deuxième entrée du multiplexeur 66, à une entrée série du registre à décalage 68, et à la deuxième entrée du multiplexeur 69. La borne de sortie 49 du dispositif 21 est reliée à la première entrée du multiplexeur 66. La première et la deuxième entrée du multiplexeur 67 sont reliées respectivement à la sortie du multiplexeur 66 et à une sortie série du registre à décalage 68. La sortie du multiplexeur 67 est reliée à une entrée d'adresses de la mémoire d'adresses 22. La sortie du multiplexeur 69 est reliée à une entrée d'adresses de la mémoire d'états 23. La mémoire d'adresses 22 possède une entrée de commande d'écriture recevant le signal d'horloge HP5, et une entrée de commande de lecture recevant le signal d'horloge HP2. La mémoire d'état 23 possède une entrée de commande d'écriture recevant le signal d'horloge HP6, et une entrée de commande de lecture recevant le signal d'horloge HP3.

Le fonctionnement du dispositif 17 de détermination des zones d'une trame varie en fonction des différents cas mentionnés dans la description du procédé selon l'invention. Quelque soit le cas considéré les signaux d'horloge HP1,..., HP6 déclenchent une même séquence d'opérations bien que, dans certains cas, certaines de ces opérations soient inutiles :

- HP1 déclenche la génération du signal C10, par le circuit logique 44, pour mettre le multiplexeur 67 dans sa deuxième position, afin d'acheminer vers l'entrée d'adresse de la mémoire d'adresses 22 une valeur $AD_n^{j-1}$ qui est le numéro de zone ayant été attribué au point au-dessus, au moment où il était le point courant, et qui est restitué par le registre 68 avec un retard d'une ligne.

- HP2 déclenche une lecture dans la mémoire d'adresses 22. Celle-ci fournit la valeur actualisée $AD_{Z'}$ du numéro de zone du point au-dessus. $AD_{Z'}$ est la valeur du numéro de la zone ayant absorbé la zone de numéro $AD_n^{j-1}$, s'il y a eu absorption ; sinon $AD_{Z'} = AD_n^{j-1}$. D'autre part HP2 déclenche la génération, par le circuit logique 44, d'un signal C11 mettant le multiplexeur 69 dans sa première position, quel que soit le cas. La valeur $AD_{Z'}$ est ainsi appliquée à l'entrée d'adresse de la mémoire d'états 23.

- HP3 déclenche une lecture dans la mémoire d'états 23 à l'adresse $AD_{Z'}$ pour obtenir une valeur $E_{Z'}$ qui est la valeur des composantes du vecteur d'état de la zone de numéro $AD_{Z'}$. La valeur $AD_{Z'}$, transmise par la borne 47 à l'entrée du registre 52, est mémorisée dans ce registre sous l'action de HP3.

- HP4 déclenche la mémorisation dans le registre 53 de la valeur $E_{Z'}$ transmise par la borne 46, et déclenche la génération, par le circuit logique 44, des signaux C1, C2, C3, C4, C5, C6, C7, et C9, qui sont fonctions des valeurs de signaux $M_{n-1}^j$, $M_n^{j-1}$, $T_{Z'}$, $T_Z$ et D, qui déterminent les cinq cas mentionnés dans la description du procédé selon l'invention, HP4 déclenche ainsi la sélection par les multiplexeurs 56 et 58 d'une valeur qui va constituer la valeur $AD_n^j$ du numéro de zone attribué au point courant. La valeur $AD_n^j$ est transmise par la borne de sortie 48 vers l'entrée de données de la mémoire d'adresses 22 et vers l'entrée du registre 68, et est appliquée à l'entrée du registre 50.

- HP5 déclenche l'écriture de la valeur $AD_n^j$ d'une part dans le registre 68 et d'autre part dans la mémoire d'adresses 22 à une adresse qui varie selon la position donnée aux multiplexeurs 54 et 66. En outre HP5 provoque la mémorisation dans les registres 50 et 51 respectivement des valeurs $AD_n^j$ et $E_n^j$ qui constitueront les valeurs $AD_Z$ et $E_Z$ lorsque le point courant actuel sera devenu le point à gauche d'un nouveau point courant. Enfin HP5 provoque la génération, par le circuit logique 44, d'un signal C11 mettant le multiplexeur 69 dans sa deuxième position, quelque soit le cas, pour acheminer $AD_n^j$ vers l'entrée d'adresse de la mémoire d'états 23.

- HP6 provoque l'écriture dans la mémoire d'états 23 de la valeur $E_n^j$ à l'adresse $AD_n^j$, pour actualiser la valeur des composantes du vecteur d'état de la zone à laquelle est attribué le point courant. En outre, HP6 provoque le décalage des données dans les registres 40 et 41 (figure 4) afin que les signaux $M_{n+1}^j$, $M_n^j$, et $M_{n+1}^{j-1}$ soient disponibles en vue de traiter le point, de rang $n + 1$ sur la ligne j, qui va constituer le prochain point courant. Enfin HP6 incrémente les compteurs 42 et 43 afin de mémoriser dans la mémoire d'image 16 la valeur $M_{n+1}^j$ associée au prochain point courant.

Les particularités du fonctionnement, correspondant aux différents cas, sont les suivantes :

Dans le premier cas, le point courant est blanc mais les deux points voisins du point courant, à gauche et au-dessus, étant noirs, le point courant est attribué à une zone nouvelle. Les opérations déclenchées par HP1, HP2 et HP3 sont inutiles. Le circuit logique 44 ayant reçu les signaux $M_n^{j-1} = 0$, $M_n^j = 1$, $M_{n-1}^j = 0$, génère sous l'action de HP4 des signaux C5 et C6 qui mettent le multiplexeur 56 dans sa deuxième position, et un signal C9 qui met le multiplexeur 66 dans sa deuxième position. La valeur $AD_n^j$ du numéro de zone du point courant est constituée par la valeur $Z_d$ fournie par le générateur d'adresses disponibles 65. La valeur $E_n^j$ des composantes du vecteur d'état de cette nouvelle zone est constituée par la valeur $E_{Z_d} = (n, j, 0\ 0)$, car le point courant (n, j) est le premier point attribué à cette zone, et :

$$T_{Z_d} = 0 ; \qquad U_{Z_d} = 0$$

La suite du processus est sans particularité.

Dans le deuxième cas le point courant et le point à gauche sont blancs et le point au-dessus est noir. Le point courant est attribué à la zone du point à gauche. Les opérations déclenchées par HP1, HP2 et HP3 sont inutiles. Sous l'action des signaux $M_n^{j-1} = 0$, $M_{n-1}^j = 1$ et $M_n^j = 1$, et du signal d'horloge HP4, le circuit logique 44 génère des signaux C3 et C4 qui mettent le multiplexeur 58 dans sa première position, des signaux C5 et C6 qui mettent le multiplexeur 56 dans sa première position, et des signaux C1 et C9 qui mettent respectivement les multiplexeurs 54 et 66 dans leur première position. Ainsi la valeur $AD_n^j$ est constituée par la valeur $AD_Z$ fournie par le registre 50, et la valeur $E_n^j$ est constituée par la valeur $E_Z$ fournie par le registre 51. Les valeurs des bits indicateurs sont inchangées. La valeur $AD_Z$ est transmise par les multiplexeurs 54, 66 et 67 jusqu'à l'entrée d'adresse de la mémoire d'adresses 22. La valeur $AD_Z$ est, en outre, acheminée à l'entrée de données de la mémoire d'adresses 22 par la borne 48. Le signal d'horloge HP5 provoque l'écriture de la valeur $AD_Z$ à l'adresse $AD_Z$ de la mémoire d'adresses 22, ce qui ne change rien à son contenu. L'actualisation de la mémoire d'états 23 se fait ensuite selon le processus général, mais est inutile car le vecteur d'état est inchangé dans le cas considéré.

Dans le troisième cas alinéa a, le point courant et ses points voisins sont blancs. Les deux zones sont distinctes et la zone du point à gauche n'a jamais absorbé de zone. Le point courant est alors attribué à la zone résultant de l'absorption de la zone du point à gauche par la zone du point au-dessus. Sous l'action des signaux $M_n^{j-1} = 1$, $M_{n-1}^{j-1} = 1$, $M_n^j = 1$, $T_Z = 0$ et $D = 1$ ($AD_Z \neq AD_{Z'}$), le circuit logique 44 déclenché par HP4, génère des signaux C3, C4, C5, C6, C1, et C9 qui mettent les multiplexeurs 58 et 56, 54 et 66 respectivement dans leur troisième, première, première et première position. Le multiplexeur 67 est mis dans sa première position comme pour les autres cas. La valeur $AD_Z$ du numéro de la zone absobée est donc transmise par les multiplexeurs 54, 66 et 67 jusqu'à l'entrée d'adresse de la mémoire d'adresses 22. D'autre part la valeur $AD_{Z'}$, du numéro de la zone l'absorbant, est acheminée par les multiplexeurs 58 et 56, et la borne 48, jusqu'à l'entrée de données de la mémoire d'adresses 22. Le signal d'horloge HP5 provoque donc l'écriture de la valeur $AD_{Z'}$ à l'adresse de valeur $AD_Z$ pour actualiser la valeur du numéro de zone des points qui avaient $AD_Z$ pour valeur de numéro de zone. La valeur $E_Z$ des composantes du vecteur d'état de la zone du point à gauche est actualisée par les moyens de calcul 57, qui sont constitués par une mémoire morte fournissant une valeur actualisée de l'indicateur d'absorption et de l'indicateur de disparition de chacune des zones en fonction des valeurs $T_Z$ et $T_{Z'}$ des indicateurs d'absorption de la zone du point à gauche et de la zone du point au-dessus, avant le fusionnement, selon la table suivante :

| Avant fusionnement | | Après fusionnement | | | |
|---|---|---|---|---|---|
| $T_Z$ | $T_{Z'}$ | $T_Z$ actualisé | $T_{Z'}$ actualisé | $U_Z$ actualisé | $U_{Z'}$ actualisé |
| 0 | 1 | 0 | 1 | 1 | 0 |
| 0 | 0 | 0 | 1 | 1 | 0 |
| 1 | 0 | 1 | 0 | 0 | 1 |
| 1 | 1 | 1 | 1 | 0 | 0 |

Dans le cas considéré :

$$T_Z = 0$$
$$T_{Z'} \text{ quelconque} \implies T_{z'} \text{ actualisée} = 1$$
$$U_{z} \text{ actualisée} = 1$$

La valeur $E_n^j = E_{Z'}$ actualisée est inscrite dans la mémoire d'état 23 à l'adresse $AD_{Z'}$ selon le processus général.

La valeur $AD_Z$ du numéro désignant la zone absorbée peut être réutilisée. Cependant la valeur $AD_Z$ peut réapparaître éventuellement à la sortie du registre 68 après un délai inférieur ou égal à la durée d'une ligne. Il n'est donc possible de réutiliser la valeur $AD_Z$ qu'après un délai correspondant à une ligne. Le circuit logique 44 génère un signal C2 validant la porte ET 60 quand le point courant et les deux points voisins sont blancs. La porte ET 60 transmet la valeur $AD_Z$ si elle reçoit en outre une deuxième validation constituée par le signal D = 1 indiquant que les zones Z et Z' sont distinctes. La valeur $AD_Z$ est stockée alors dans le générateur d'adresses disponibles 65 pendant une durée au moins égale à une ligne.

Dans le troisième cas alinéa b, le point courant est attribué à la zone résultant de l'absorption de la zone du point au-dessus par la zone du point à gauche, si cette dernière n'a jamais absorbé de zone, sinon le point courant est attribué à la zone du point courant à gauche comme dans le cas n° 2.

- Si $T_{Z'} = 0$, sous l'action des signaux $M_n^{j-1} = 1$, $M_{n-1}^j = 1$, $M_n^j = 1$, $T_{Z'} = 0$, $T_Z = 1$ et $D = 1$ ($AD_Z \neq AD_{Z'}$), le circuit logique 44 déclenché par HP4, génère des signaux C3, C4, C5, C6, C1 et C9 qui mettent les multiplexeurs 58, 56, 54 et 66 respectivement dans leur deuxième, première, deuxième et première position. Le multiplexeur 67 est mis dans sa première position comme pour les autres cas. La valeur $AD_{Z'}$ , du numéro de la zone absorbée, est donc transmise par les multiplexeurs 54, 66 et 67 jusqu'à l'entrée d'adresse de la mémoire d'adresses 22. La valeur $AD_Z$ du numéro de la zone l'absorbant est transmise par les multiplexeurs 58 et 56, et la borne 48, jusqu'à l'entrée de données de la mémoire d'adresses 22. Le signal d'horloge HP5 provoque donc l'écriture de la valeur $AD_Z$ à l'adresse $AD_{Z'}$ de la mémoire 22, pour actualiser la valeur du numéro de zone des points qui avaient $AD_{Z'}$ pour valeur de numéro de zone. La valeur $E_Z$ des composantes du vecteur d'état de la zone du point à gauche est actualisée par les moyens de calcul 57 selon la table donnée ci-dessus.

$$T_{Z'} = 0 \qquad\qquad T_{Z'} = 0 \text{ inchangée}$$
$$\Longrightarrow \quad U_{Z'} = 1$$
$$T_Z = 1 \qquad\qquad T_Z = 1 \text{ inchangé.}$$

- Si $T_{Z'} = 1$, deux zones distinctes ($D = 1$) sont connexes au point courant qui est blanc, mais le fusionnement des deux zones n'est pas possible car elles ont déjà chacune absorbé au moins une zone ($T_Z = T_{Z'} = 1$). Elles restent indépendantes et le point courant est attribué à la zone du point à gauche. Sous l'action des signaux $M_n^{j-1} = 1$, $M_{n-1}^j = 1$, $M_n^j = 1$, $T_Z = 1$, $T_{Z'} = 1$, et $D = 1$, le circuit logique 44 déclenché par HP4 génère des signaux C3, C4, C5, C6, C1 et C9 qui mettent les multiplexeurs 58, 56, 54 et 66 chacun dans leur première position. Le multiplexeur 67 est mis dans sa première position comme dans les autres cas. La valeur $AD_Z$ du numéro de la zone du point à gauche est donc transmise par les multiplexeurs 58 et 56, et par la borne 48, jusqu'à l'entrée des données de la mémoire d'adresses 22. Par ailleurs $AD_Z$ est transmise par le multiplexeur 54, la borne 49, et les multiplexeurs 66 et 67 jusqu'à l'entrée d'adresse de la mémoire d'adresses 22. Le signal d'horloge HP5 provoque l'écriture de la valeur $AD_Z$ à l'adresse $AD_Z$ dans cette mémoire, son contenu est donc inchangé.

Aucune des valeurs de numéro de zone $AD_Z$ et $AD_{Z'}$ n'étant rendue libre, le circuit logique 44 ne valide pas la porte 60. Le signal d'horloge HP6 déclenche l'inscription de la valeur $E_n^j = E_Z$ actualisée dans la mémoire d'états 23 à l'adresse $AD_Z$. Ce traitement est identique à celui du cas n° 2, et ne change pas le contenu de la mémoire d'états 23.

Dans le troisième cas alinéa c, deux zones sont connexes au point courant, qui est blanc, mais en fait il s'agit de la même zone (D = 0). Le traitement est identique à celui du cas n° 2, et à celui du cas ci-dessus.

Dans le quatrième cas, le point courant et le point au-dessus sont blancs, et le point à gauche est noir. Le point courant est attribué à la zone du point au-dessus. Le circuit logique 44, sous l'action des signaux $M_n^{j-1} = 1$, $M_{n-1}^j = 0$, $M_n^j = 1$ et du signal d'horloge HP4, génère des signaux C3, C4, C5, C6, C1 et C9, qui mettent les multiplexeurs 58, 56, 54 et 66 respectivement dans leur quatrième, première, deuxième et première position. La valeur $AD_{Z'}$ du numéro de la zone du point au-dessus est transmise par les multiplexeurs 58, 56 et la borne 48 jusqu'à l'entrée des données de la mémoire d'adresses 22 ; et elle est transmise par les multiplexeurs 54, 66 et 67 jusqu'à l'entrée d'adresse de cette mémoire. Le signal d'horloge HP5 provoque donc l'écriture de la valeur $AD_{Z'}$ à l'adresse de la valeur $AD_{Z'}$ ce qui ne change pas le contenu de la mémoire d'adresses 22. La valeur $E_{Z'}$ est transmise sans modification par les multiplexeurs 58, 56 et le borne 46 jusqu'à l'entrée des données de la mémoire d'états 23. La valeur $AD_{Z'}$ est transmise par les multiplexeurs 58 et 56, la borne 48 et le multiplexeur 69 jusqu'à l'entrée d'adresse de la mémoire d'états 23. Le signal d'horloge HP6 provoque l'écriture de la valeur $E_n^j = E_{Z'}$ actualisée à l'adresse $AD_{Z'}$ dans cette mémoire 23, ce qui ne change pas son contenu.

Dans le cas où le point courant est noir, le traitement effectué par le dispositif selon l'invention consiste à attribuer le point courant à une zone fictive unique, portant un numéro déterminé $AD_o$, et ayant une valeur déterminée, $E_o$, pour les composantes de son vecteur état. Par

exemple $E_o = (0, 0, 0, 1)$. Sous l'action du signal $M_n^j = 0$, et sous l'action du signal d'horloge HP4, le circuit logique 44 génère des signaux C5, C6 et C9 qui mettent les multiplexeurs 56 et 66 respectivement dans leur troisième et deuxième position ; et un signal C10 qui met le multiplexeur 67 dans sa première position comme dans les autres cas. Sous l'action du signal d'horloge HP5 le circuit logique 44 génère un signal C11 qui met le multiplexeur 69 dans sa deuxième position. La valeur fixe $AD_o$ est transmise par les multiplexeurs 56, 66, 67, jusqu'à l'entrée d'adresse et l'entrée de données de la mémoire d'adresses 22, et par le multiplexeur 69 jusqu'à l'entrée d'adresse de la mémoire d'états 23. Le signal d'horloge HP5 provoque l'écriture de la valeur $AD_o$ à l'adresse $AD_o$ de la mémoire d'adresses 22, ce qui ne change pas son contenu. La valeur $E_o$ est transmise par le multiplexeur 56 et la borne 46 jusqu'à l'entrée des données de la mémoire d'états 23. Le signal d'horloge HP6 provoque l'écriture de la valeur $E_o$ à l'adresse $AD_o$ de cette mémoire 19, ce qui ne change pas son contenu.

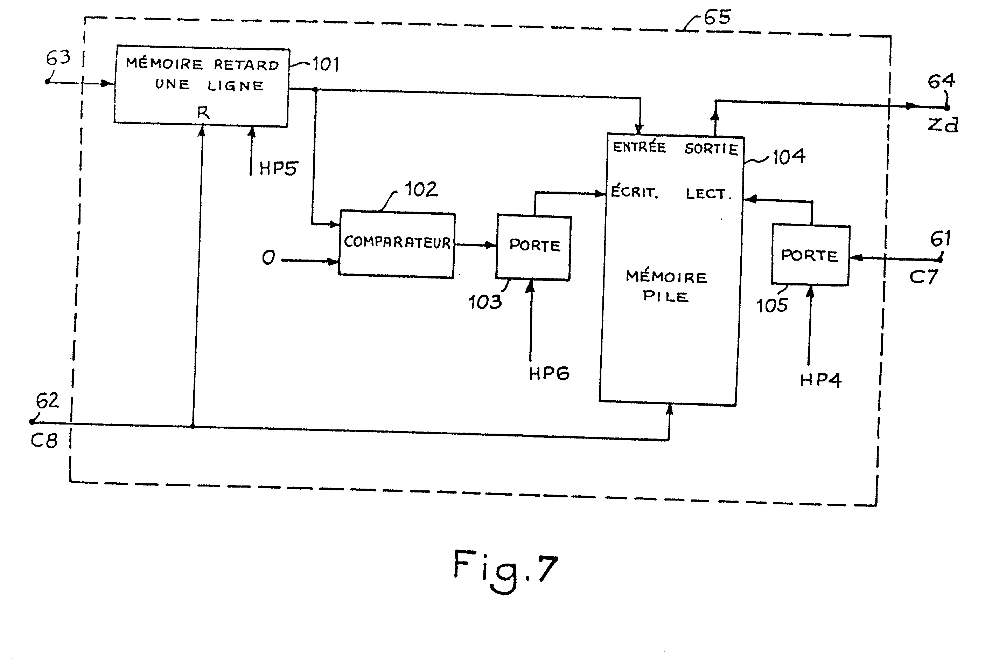

La figure 7 représente le schéma synoptique d'un exemple de réalisation du générateur d'adresses disponibles 65. La borne d'entrée 63 reçoit, soit une valeur d'adresse, $AD_z$, ou $AD_z$ , disponible parce que la zone portant ce numéro a été absorbée par une autre, soit une valeur nulle parce que la porte 60 est bloquée. Cette donnée est fournie à l'entrée d'une mémoire à décalage 101, qui la retarde d'un temps équivalent à une ligne. Le décalage est commandé par l'horloge HP5. A la sortie de cette mémoire un comparateur 102 fournit un signal logique égal à 1, par exemple, si la donnée est différente de zéro. Ce signal logique valide alors une porte 103, qui permet au signal d'horloge HP6 de déclencher l'écriture de la donnée dans une mémoire-pile 104. Dans cette mémoire les données inscrites en dernier, sont lues en premier. La mémoire à retard d'une ligne, 101, permet de s'assurer que les adresses des zones absorbées sont effectivement disponibles, c'est-à-dire ne sont plus utiles pour l'attribution de points à des zones. Quand il n'y a pas d'adresses à réutiliser, la mémoire à retard 101 enregistre une valeur nulle qui est éliminée ensuite grâce au comparateur 102 qui empêche son inscription dans la mémoire-pile 104. Celle-ci est lue uniquement lorsqu'une zone nouvelle est créée (premier cas). Dans ce cas le circuit logique 44 fournit, par l'intermédiaire d'une borne d'entrée 61, un signal de commande C7 qui valide une porte 105, pour laisser passer une impulsion de l'horloge HP4. Celle-ci provoque une lecture, dans la mémoire-pile 104, de la dernière donnée inscrite ; celle-ci est ensuite fournie à la borne de sortie 64 du générateur d'adresses disponibles 65. Au début du traitement d'une trame le circuit logique 44 génère un signal C8, transmis au générateur 65 par une borne d'entrée 62 pour initialiser la mémoire-pile 104 en chargeant une collection d'adresses constituée des adresses de la mémoire d'adresses 22. D'autre part, le signal de commande C8 remet à zéro le contenu de la mémoire 101 à retard d'une ligne.

Quel que soit le cas, même si le point courant est noir, les signaux d'horloge HP1,..., HP6 sont générés pendant toute la durée de la détermination des zones d'une trame. Dans certains cas, ils commandent des lectures ou des écritures inutiles dans les mémoires, mais cela n'a pas d'inconvénient.

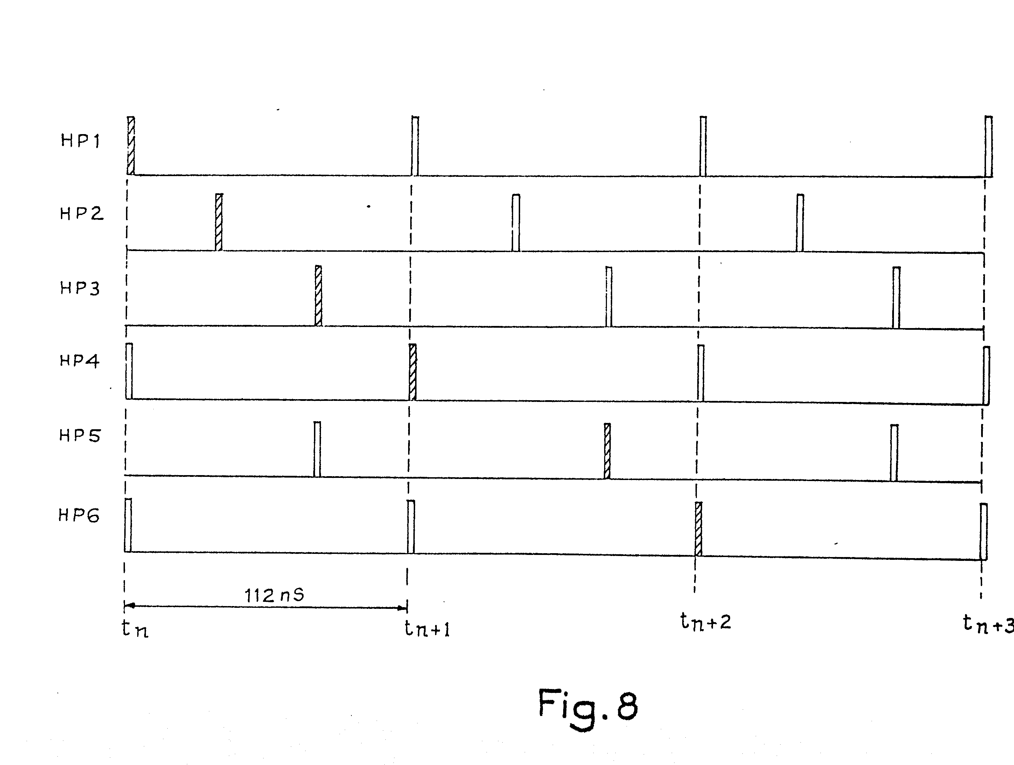

La figure 8 représente le chronogramme d'un exemple de réalisation des signaux d'horloge HP1, ..., HP6. Ces signaux d'horloge ont chacun une période T correspondant à l'analyse d'un point d'image. La technologie des composants, dans cet exemple la technologie TTL, limite la fréquence maximale des signaux d'horloge. Pour remédier à ce problème, la solution adoptée dans cet exemple consiste à décaler les impulsions d'horloge dans le temps. Le traitement d'un point dure deux périodes T, mais deux points sont traités quasi-simultanément. L'instant $t_n$ correspond au front montant du signal d'horloge HP1 déclenchant le début du traitement du point courant d'indice n, et $t_{n+1}$, $t_{n+2}$, $t_{n+3}$, etc... sont les instants correspondant aux impulsions suivantes du signal d'horloge HP1. Sur la figure 8 les impulsions hachurées correspondent au traitement du point courant d'indice n. Ce traitement s'étend de l'instant $t_n$ jusqu'à l'instant $t_{n+2}$. Pendant l'intervalle $t_n$, $t_{n+1}$ les impulsions des horloges HP1, HP2, HP3 commandent le traitement du point courant d'indice n, les impulsions d'horloge HP4, HP5, et HP6 commandent une partie du traitement du point d'indice n-1. Les fonctions des signaux d'horloge sont attribuées de telle façon que chaque mémoire, 22 ou 23, ne puisse être commandée simultanément par deux signaux d'horloge. D'autre part, les signaux de commande des multiplexeurs 66 et 67 sont déclenchés par les signaux d'horloge HP1 et HP4 qui ne commandent pas la mémoire 22, et le signal de commande C11 du multiplexeur 69 est déclenché par le signal d'horloge HP5 qui ne commande pas la mémoire 23. Ainsi un multiplexeur est mis en position pendant que la mémoire à laquelle il est relié ne travaille pas. D'autre part, il n'est mis en position que peu de temps avant le déclenchement d'une opération de lecture ou d'écriture dans cette mémoire. La période T est de 112 nanosecondes dans l'exemple décrit. Cette période correspond à l'analyse d'un point d'une image de 576 lignes utiles, comportant chacune 462 points utiles. Par rapport aux impulsions du signal d'horloge HP1 les impulsions des horloges HP2, ..., HP6, sont retardées respectivement de $\frac{T}{3}$, $\frac{2T}{3}$, T, $\frac{5T}{3}$ et 2T.

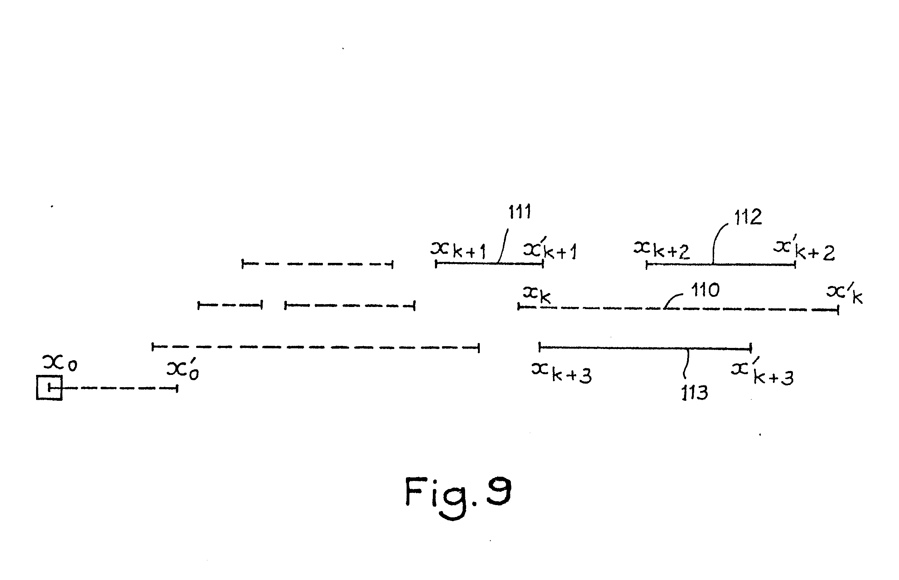

La figure 9 représente un exemple d'une zone d'une image, illustrant les symboles utilisés pour désigner les coordonnées des extrémités des segments au cours de la description du fonctionnement du dispositif 18 de détermination des segments d'une zone. Les coordonnées de la première extrémité du premier segment 109 de cette zone sont $(x_o, y_o)$, et les coordonnées de la deuxième extrémité sont $(x'_o, y_o)$, $x'_o$ étant supérieure à $x_o$. A un instant donné un certain nombre de segments de la zone ont été décrits, ils sont représentés en pointillés, et certains parmi eux ont été codés et transmis, le dernier à avoir été codé et transmis, le segment 110, est dit segment courant. Les coordonnées de la première extrémité et de la deuxième extrémité du segment courant 110 sont respectivement $(x_k, y_k)$ et $(x'_k, y_k)$, $x'_k$ étant supérieure à $x_k$. Sur la ligne au-dessus de la ligne du segment courant il y a deux segments connexes au segment courant, 111 et 112, les coordonnées des extrémités du premier sont $(x_{k+1}, y_k-1)$ et $(x'_{k+1}, y_k-1)$. Les coordonnées des extrémités du deuxième sont $(x_{k+2}, y_k-1)$, $(x'_{k+2}, y_k-1)$. Dans cet exemple :

$$x_{k+1} < x_k < x'_{k+1} < x_{k+2} < x'_{k+2} < x'_k$$

Sur la ligne en dessous de la ligne du segment courant il y a un segment connexe unique, 113, dont les extrémités ont pour coordonnées $(x_{k+3}, y_k+1)$ et $(x'_{k+3}, y_k+1)$. Dans cet exemple :

$$x_k < x_{k+3} < x'_{k+3} < x'_k$$

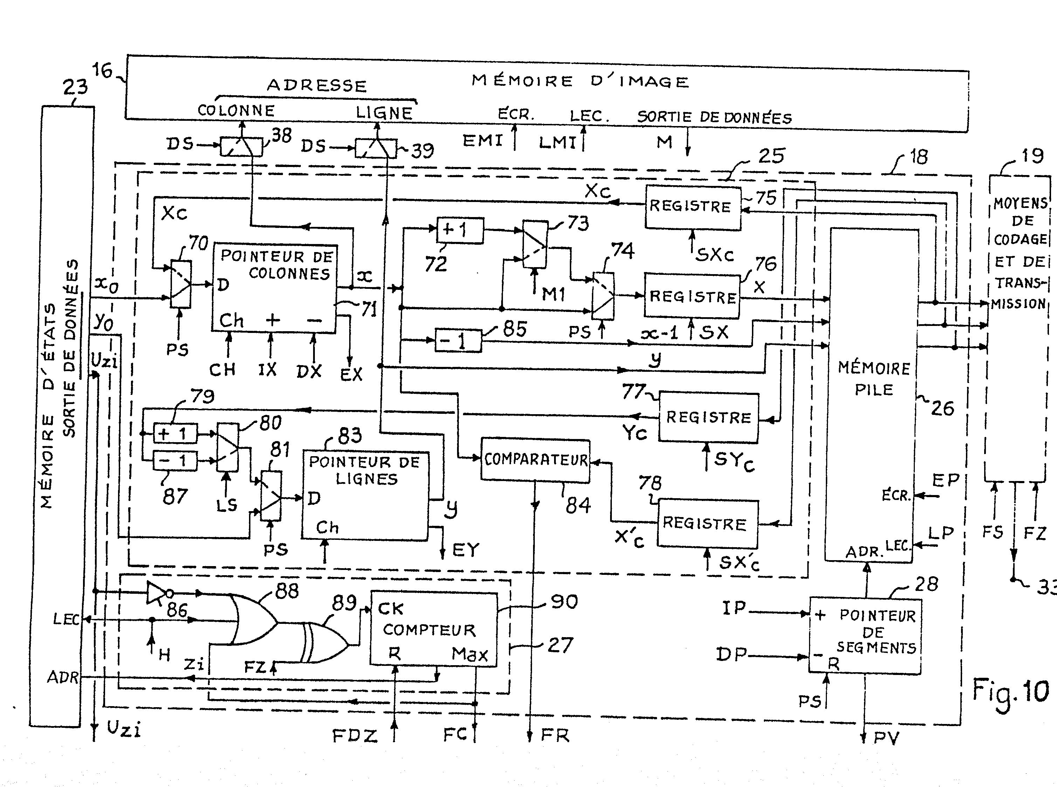

La figure 10 représente le dispositif 18 de détermination des segments d'une zone avec ses connections à la mémoire d'états 23, à la mémoire d'image 16, aux dispositifs de codage et de transmission 19, et aux moyens de commande 20 qui ont été décrits précédemment. Cette figure 10 détaille le schéma synoptique d'un exemple de réalisation du dispositif 25 de détermination des segments connexes au segment courant, et du pointeur de zones 27.

Le pointeur de zones 27 comporte un inverseur logique 86, une porte OU 88 à trois entrées, une porte OU exclusif 89 à deux entrées, et un compteur 90. Le compteur 90 comporte une entrée d'horloge CK reliée à la sortie de la porte OU exclusif 89, une entrée R de remise à zéro recevant un signal logique FDZ fourni par les moyens de commande 20, une sortie fournissant une valeur d'adresse $Z_i$ à une entrée d'adresse de la mémoire d'états 23, et une sortie Max fournissant un signal logique FC d'une part à une entrée des moyens de commande 20 et d'autre part à une première entrée de la porte OU 88. Une première entrée de la porte OU exclusif 89 reçoit un signal logique FZ fourni par les moyens de commande 20, et une deuxième entrée de la porte OU exclusif 89 est reliée à la sortie de la porte OU 88. Une deuxième entrée de la porte OU 88 est reliée à la sortie de l'inverseur 86, une troisième entrée reçoit le signal d'horloge H, qui est appliqué aussi à une entrée de commande de lecture de la mémoire d'états 23. Le signal d'horloge H est fourni par les moyens de commande 20 pendant la durée du codage de toutes les zones d'une trame. L'entrée de l'inverseur 86 est reliée à une sortie de données de la mémoire d'états 23 fournissant une valeur binaire $U_{Z_i}$, cette valeur binaire étant appliquée aussi à une entrée des moyens de commande 20.

La mémoire pile 26 possède trois entrées de données reliées respectivement à une première, une deuxième et une troisième sortie du dispositif 25 ; une première, une deuxième, et une troisième sortie de données reliées respectivement à trois entrées du dispositif 19 de codage et de transmission ; une entrée de commande d'écriture recevant un signal de commande EP fourni par les moyens de commande 20 ; une entrée de commande de lecture recevant un signal logique LP fourni par les moyens de commande 20 ; et une entrée d'adresse reliée à une première sortie du pointeur de segments 28. Le pointeur de segments 28 est un compteur possèdant une deuxième sortie fournissant un signal logique PV lorsque la mémoire pile 26 est vide, une entrée de commande d'incrémentation "+"et une entrée de commande de décrémentation "-" recevant respectivement un signal IP et un signal DP fournis par les moyens de commande 20, et une entrée de remise à zéro R recevant un signal PS fourni par les moyens de commande 20.

Le dispositif 25 de détermination des segments connexes au segment courant comporte cinq multiplexeurs à deux entrées et une sortie, 70, 73, 74, 80 et 81. Chacun de ces multiplexeurs est équivalent à un commutateur ayant un circuit à deux positions, reliant une première entrée à la sortie dans une première position et reliant une deuxième entrée à la sortie dans une deuxième position. La première position est représentée en traits pleins, la deuxième en pointillés. Chacun de ces multiplexeurs est commandé par un signal logique fourni par les moyens de commande 20 et qui est respectivement : PS, M1, PS, LS, PS. Le dispositif 25 comporte en outre un pointeur de colonnes 71, un pointeur de lignes 83, quatre registres 75, 76, 77, 78, un comparateur numérique 84, deux additionneurs 72 et 79, et deux soustracteurs 85 et 87. Les additionneurs 72 et 79 comportent une entrée et une sortie pour fournir une valeur égale à la valeur présente sur l'entrée additionnée d'une unité. Les soustracteurs 85 et 87 possèdent une entrée et une sortie pour fournir une valeur égale à la valeur présente sur l'entrée diminuée d'une unité. Le pointeur de colonnes 71 est un compteur comportant une entrée de données D reliée à la sortie du multiplexeur 70, et trois entrées de commande recevant des signaux logiques fournis par les moyens de commande 20 : une entrée de commande de chargement Ch recevant un signal CH, une entrée de commande d'incrémentation "+" recevant un signal un signal IX, et une entrée de commande de décrémentation "-" recevant un signal DX. D'autre part le pointeur de colonnes 71 possède une première sortie fournissant un signal logique EX aux moyens de commande 20 et une deuxième sortie fournissant une valeur numérique x à l'entrée d'adresse colonne de la mémoire d'image 16 par l'intermédiaire du multiplexeur 38 mentionné dans la description des moyens de commande 20. Le pointeur de lignes 83 est constitué par un registre ayant une entrée de données D reliée à la sortie du multiplexeur 81, une entrée de commande de chargement Ch recevant le signal logique CH fourni par les moyens de commande 20, une première sortie fournissant un signal logique

EY aux moyens de commande 20, et une deuxième sortie fournissant une valeur numérique y à l'entrée d'adresse ligne de la mémoire d'image 16 par l'intermédiaire du multiplexeur 39 mentionné dans la description des moyens de commande 20. La première entrée de multiplexeur 70 est reliée à une première sortie de données de la mémoire d'états 23, et la deuxième entrée du multiplexeur 70 est reliée à une sortie du registre 75. La première entrée, la deuxième entrée, et la sortie du multiplexeur 80 sont reliées respectivement à la sortie de l'additionneur 79, à la sortie du soustracteur 87, et à la deuxième entrée du multiplexeur 81. La première entrée du multiplexeur 81 est reliée à une deuxième sortie de données de la mémoire d'états 23. L'entrée de l'additionneur 79 et l'entrée du soustracteur 87 sont reliées à la sortie du registre 77. La première entrée, la deuxième entrée, et la sortie du multiplexeur 73 sont reliées respectivement à la sortie de l'additonneur 72, à la deuxième sortie du pointeur de colonnes 71, et à la deuxième entrée du multiplexeur 74. La première entrée du multiplexeur 74 est reliée à la deuxième sortie du pointeur de colonnes 71. L'entrée de l'additionneur 72 et l'entrée du soustracteur 85 sont reliées à la deuxième sortie du pointeur de colonnes 71. La sortie du multiplexeur 74 est reliée à une entrée du registre 76, la sortie du soustracteur 85 est reliée à la deuxième sortie du dispositif 25. Le comparateur 84 possède deux entrées, une première entrée est reliée à la deuxième sortie du pointeur de colonnes 71, et une deuxième entrée est reliée à une sortie du registre 78. La sortie du comparateur 84 fournit un signal logique FR aux moyens de commande 20 lorsque la valeur numérique présente sur sa première entrée est supérieure ou égale à la valeur présente sur sa deuxième entrée. Le registre 78 possède une entrée de données reliée à la deuxième sortie de la mémoire pile 26, et une entrée de commande recevant un signal $SX'_c$ fourni par les moyens de commande 20. Le registre 77 possède une entrée de données reliée à la troisième sortie de la mémoire pile 26 et une entrée de commande recevant un signal logique $SY_c$ fourni par les moyens de commande 20. Le registre 75 possède une entrée de données reliée à la première sortie de la mémoire pile 26 et une entrée de commande recevant un signal logique $SX_c$ fourni par les moyens de commande 20. Le registre 76 possède une sortie constituant la première sortie du dispositif 25, et une entrée de commande recevant un signal logique SX fourni par les moyens de commande 20. La deuxième et la troisième sortie du dispositif 25 sont constituées respectivement par la sortie du soustracteur 85 et la deuxième sortie du pointeur de lignes 83. Les valeurs stockées par les registres 75, 76, 77, 78 à chaque instant sont notées $X_c$, X, $Y_c$, $X'_c$ respectivement.

Le dispositif de codage et de transmission 19 reçoit trois valeurs numériques fournies respectivement par les trois sorties de donnée de la mémoire pile 26, et les deux signaux de commande FS et FZ fournis par les moyens de commande 20.

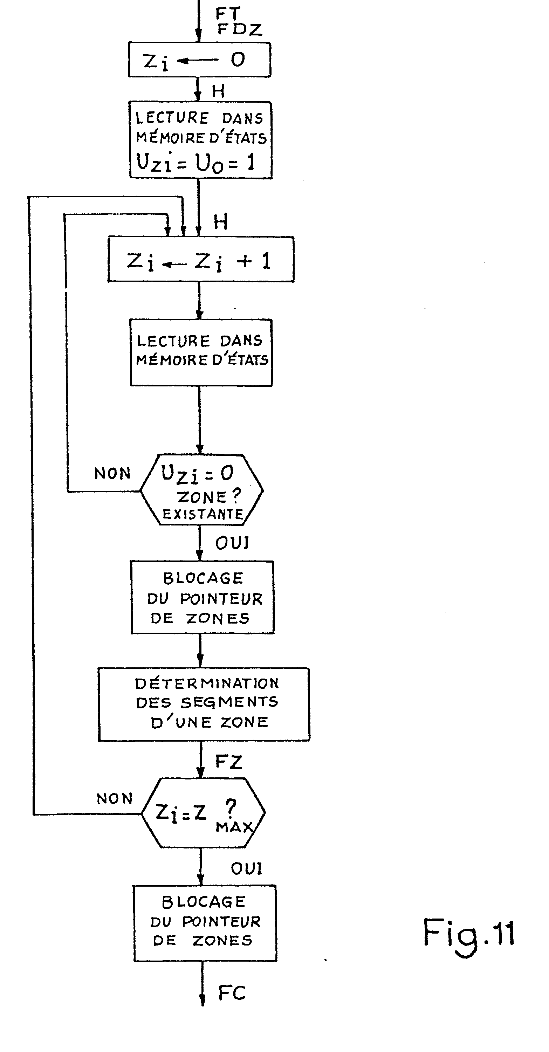

Les figures 11 à 15 représentent des organigrammes explicitant le fonctionnement de cet exemple de réalisation après que les valeurs binaires correspondant à tous les points d'une trame aient été stockées dans la mémoire d'image 16. Le compteur 43 (figure 4) génère alors un signal FT indiquant la fin de la trame aux moyens de commande 20, ceux-ci commandent les opérations qui achèvent l'attribution à une zone du dernier point de la trame considérée puis ils génèrent un signal logique FDZ indiquant la fin de la détermination des zones de cette trame. Le signal FDZ est appliqué à l'entrée R de remise à zéro du compteur 90 du pointeur de zones 27, le compteur 90 fournit alors une valeur $Z_i = 0$ à l'entrée d'adresse de la mémoire d'états 23 et une impulsion d'horloge H provoque une lecture dans la mémoire d'états 23. Par convention l'adresse 0 correspond au numéro de zone attribué à tous les points noirs de l'image et le vecteur d'état lu à cette adresse a pour composantes 0, 0, 0, 1. La valeur $U_{Z_i}$ du bit indicateur de disparition est toujours égale à 1 à cette adresse car, avant de commencer la détermination des zones d'une trame, la mémoire d'états 23 a été chargée avec des valeurs 1. Ainsi aux adresses non utilisées la valeur du bit indicateur de disparition est égale à 1 et ces adresses ne sont pas prises pour des numéros de zones valides. La valeur $U_{Z_i} = U_0 = 1$ est inversée par l'inverseur 86 et valide la porte OU 88. La prochaine impulsion de l'horloge H est transmise par les portes 88 et 89 à l'entrée d'horloge CK du compteur 90. Le front montant de cette impulsion d'horloge incrémente la valeur d'adresse $Z_i$ fournie par le compteur 90, et le front descendant de cette impulsion d'horloge provoque une lecture dans la mémoire d'états 23. Si la nouvelle valeur $U_{Z_i}$ est égale à 1, c'est-à-dire si $Z_i$ ne correspond pas à une zone existante, la porte OU 88 est validée par la valeur $U_{Z_i}$ inversée et le compteur 90 pourra être incrémenté par la prochaine impulsion d'horloge. Par contre si $U_{Z_i} = 0$ la zone dont la valeur de numéro est $Z_i$ est une zone existante, l'incrémentation du pointeur de zones 27 est bloquée par le signal $U_{Z_i}$ inversé bloquant la porte OU 88. Le signal $U_{Z_i} = 0$ valide les moyens de commande 20 pour déclencher la détermination des segments de la zone de numéro $Z_i$. Quand cette détermination est terminée la pointeur de segments 28 fournit aux moyens de commande 20 un signal PV indiquant que la mémoire pile 26 est vide, les moyens de commande 20 mémorisent cette indication et fournissent un signal FZ indiquant la fin de la détermination de tous les segments de cette zone. Le signal FZ est une impulsion qui est appliquée à la deuxième entrée de la porte OU exclusif 89 pour incrémenter le compteur 90 et provoquer une lecture à l'adresse suivante dans la mémoire d'états 23 sous l'action de la prochaine impulsion d'horloge H. Si $U_{Z_i} = 1$ à l'adresse suivante le pointeur de zones 27 est débloqué, les valeurs $Z_i$ sont incrémentées jusqu'à ce qu'il y ait une valeur $U_{Z_i} = 0$ pour le rebloquer ou bien jusqu'à ce que le compteur 90 atteigne la valeur maximale Zmax correspondant à l'adresse maximale de la mémoire d'états. Dans ce cas la sortie Max du compteur 90 fournit un signal logique FC = 1 qui bloque le pointeur en inhibant la porte OU 88, et qui indique aux moyens de commande 20 la fin du codage de toutes les zones existant dans la trame considérée.

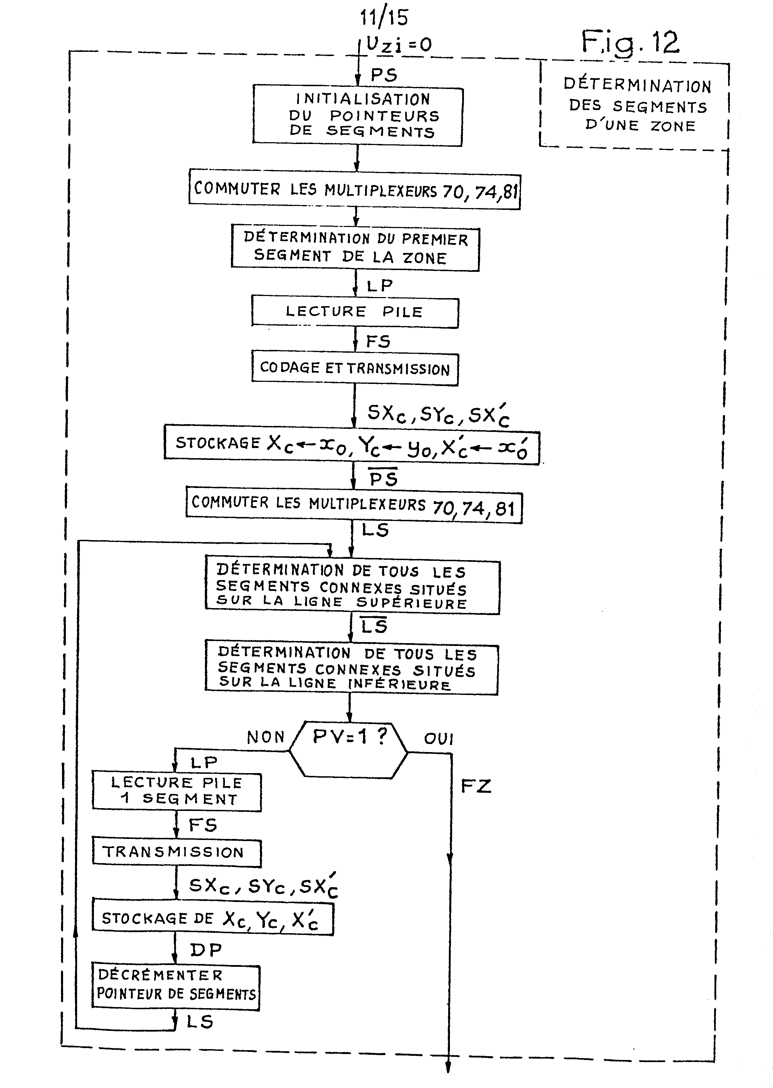

L'organigramme de la figure 12 décrit la séquence d'opérations appelée dans l'organigramme précédent "détermination des segments d'une zone". Quand les moyens de commande 20 reçoivent le signal $U_{Z_i} = 0$ ils mémorisent ce signal et génèrent un signal logique PS qui initialise le pointeur de segments 27 et qui met les multiplexeurs 70, 81 et 74 dans leur première position. Les multiplexeurs 70 et 81 acheminent alors respectivement les valeurs $x_o$ et $y_o$ vers les entrées de données du pointeur de colonnes 71 et du pointeur de lignes 83. $x_o$ et $y_o$ sont les coordonnées du premier point attribué à la zone considérée, point qui constitue aussi la première extrémité du premier segment de cette zone. Les opérations suivantes consistent à déterminer l'abscisse $x'_o$ de la deuxième extrémité de ce premier segment. Les opérations de détermination du premier segment de la zone seront explicitées plus loin. Après ces

opérations les valeurs $x_o$, $x'_o$ et $y_o$ sont présentes dans la mémoire pile 26. Elles sont lues immédiatement sous l'action d'un signal de lecture LP fournis par les moyens de commande 20, puis sont codées et transmises par le dispositif 19 validé par le signal FS. Puis les valeurs $x_o$, $y_o$, $x'_o$ sont stockées dans les registres 75, 76 et 78 sous l'action des signaux $SX_c$, $SY_c$, et $SX'_c$, respectivement.

Le traitement du premier segment étant terminé les moyens de commande 20 annulent le signal logique PS ce qui a pour effet de commuter les multiplexeurs 70, 74, et 81 dans leur deuxième position, et ils génèrent un signal logique LS indiquant le début de la détermination de tous les segments connexes situés sur la ligne supérieure. Cette détermination est décrite plus loin. Quand elle est terminée les moyens de commande 20 annulent le signal LS ce qui déclenche la détermination de tous les segments connexes situés sur la ligne inférieure. Quand cette détermination est terminée les moyens de commande 20 testent la sortie du pointeur de segments 28 indiquant si la mémoire pile 26 est vide. Si la pile n'est pas vide, l'absence de signal PV = 1 provoque la génération d'un signal LP commandant une lecture dans la mémoire pile 26 puis la génération d'un signal FS validant le dispositif 19 pour le codage et la transmission des données lues dans la mémoire pile 26. Ces données correspondent au segment décrit immédiatement précédemment si la recherche des segments connexes a été fructueuse, sinon elles correspondent à un segment qui a été décrit antérieurement mais dont les données n'ont pas été codées et transmises mais mises en attente. Les moyens de commande 20 génèrent trois signaux de commande $SX_c$, $SY_c$, et $SX'_c$ qui provoquent le stockage des coordonnées des extrémités du segment qui vient d'être codé et transmis et qui va donc constituer le nouveau segment courant. S'il s'agit du segment courant correspondant à la figure 9 ces valeurs sont : $X_c = x_k$, $Y_c = y_k$, $X'_c = x'_k$.

Ensuite les moyens de commande 20 génèrent un signal DP pour décrémenter d'une unité le pointeur de segments 28, et un signal LS pour préparer la recherche des segments connexes situés sur la ligne au-dessus du nouveau segment courant. Cette succession de détermination de tous les segments connexes sur la ligne supérieure et sur la ligne inférieure continue jusqu'à ce que le pointeur de segments 28 transmette un signal PV = 1 indiquant aux moyens de commande 20 que la mémoire pile 26 est vide, c'est-à-dire que la recherche des segments appartenant à cette zone est terminée. Alors les moyens de commande 20 génèrent un signal FZ indiquant au dispositif 19 que la zone est terminée afin d'intercaler un drapeau HDLC à la fin du paquet de données correspondant à cette zone, et débloquant le pointeur de zones 27 pour adresser le vecteur d'états d'une autre zone.

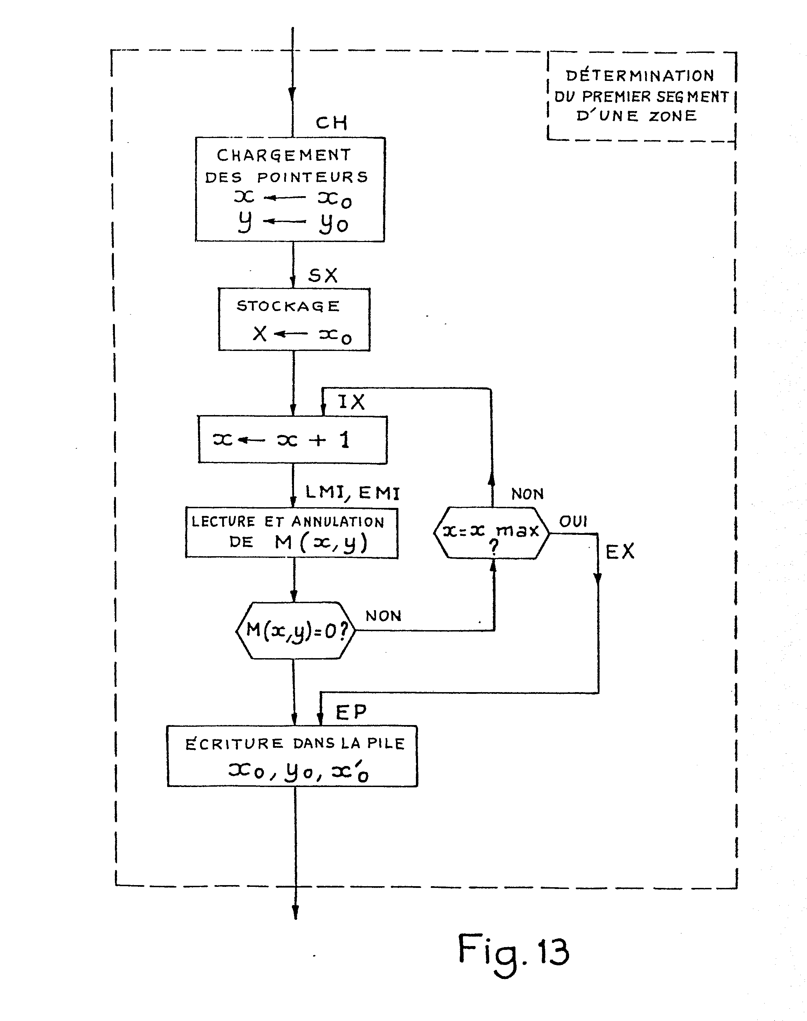

La figure 13 représente un organigramme de la "détermination du premier segment d'une zone" mentionnée dans l'organigramme de la figure 12. Les moyens de commande 20 génèrent un signal CH déclenchant le chargement du pointeur de colonnes 71 et du pointeur de lignes 83 respectivement avec les valeurs numériques $x_o$ et $y_o$ transmises respectivement par les multiplexeurs 70 et 81 qui sont dans leur première position. Les coordonnées de la première extrémité du premier segment sont disponibles sans aucun calcul. La valeur $x_o$ est transmise de la deuxième sortie du pointeur de colonnes 71 à l'entrée du registre 76 par le multiplexeur 74 qui est dans sa première position. Les moyens de commande 20 génèrent le signal SX qui déclenche le stockage de $x_o$ dans le registre 76 pour conserver cette valeur pendant la durée du calcul de $x'_o$. La valeur $y_o$ est disponible sur la deuxième sortie du pointeur de lignes 83. La détermination de $x'_o$ consiste à incrémenter le pointeur de colonnes 71 en envoyant le signal logique IX sur son entrée de commande d'incrémentation, puis à effectuer une lecture et une annulation de la valeur $M(x, y)$ dans la mémoire d'image 16 sous l'action d'un signal de commande de lecture LMI et d'un signal de commande d'écriture EMI, et à tester la valeur $M(x, y)$. Si cette valeur n'est pas nulle la deuxième extrémité du premier segment n'est pas encore trouvée, le pointeur de colonnes 71 est incrémenté encore une fois par le signal IX. Avant chaque nouvelle incrémentation la valeur x est testée. Si $x = x_{max}$ la recherche a atteint l'extrémité droite de la ligne et ne peut continuer, la première sortie du pointeur de colonnes fournit alors un signal EX aux moyens de commande 20, l'incrémentation est arrêtée. Si une valeur $M(x, y) = 0$ est détectée l'incrémentation est arrêtée également, et dans les deux cas les moyens de commande 20 génèrent un signal EP commandant l'écriture dans la mémoire pile 26 des valeurs $x_o$, $y_o$, et $x'_o$ constituées par les

valeurs X, y, et x - 1 fournies respectivement par la sortie du registre 76, la sortie du pointeur de lignes 83, et la sortie du soustracteur 85.

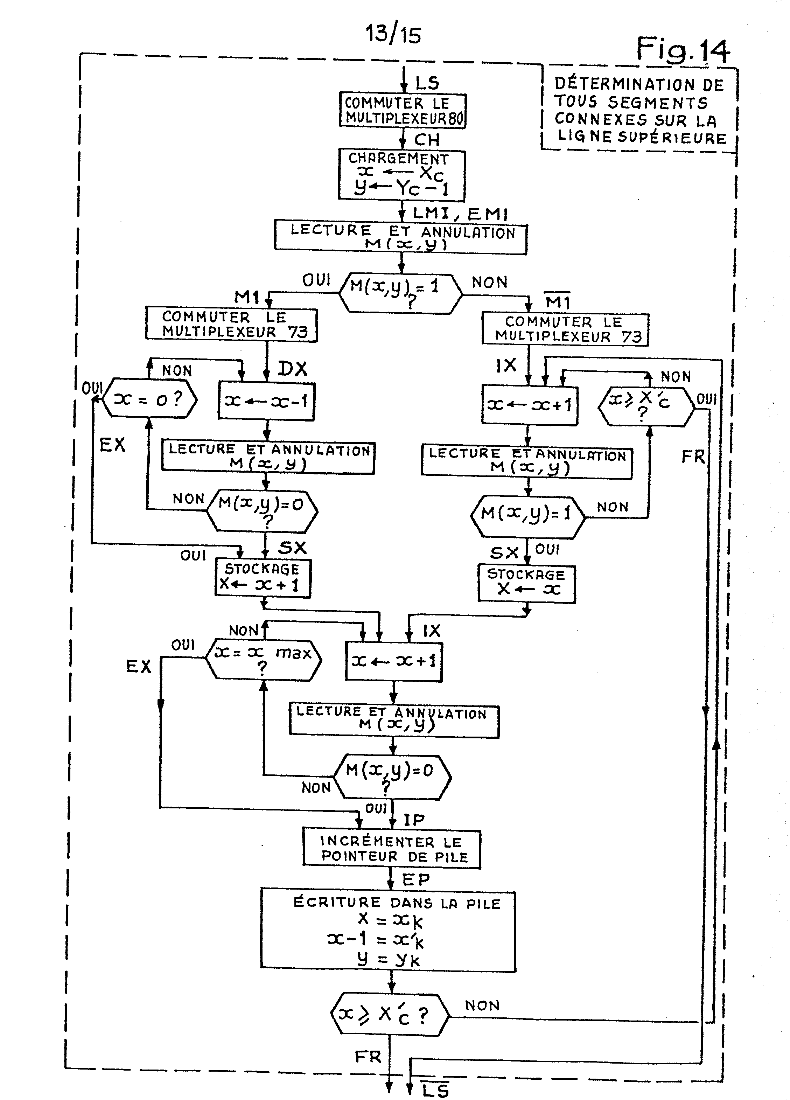

La figure 14 représente un organigramme de la "détermination de tous les segments connexes sur la ligne supérieure" mentionnée dans l'organigramme de la figure 12. Le signal de commande LS commute le multiplexeur 80 dans sa deuxième position. Le multiplexeur 81 ayant été commuté dans sa deuxième position par la disparition du signal PS, la valeur $Y_c - 1$ fournie par la sortie de l'additionneur de 79 est transmise à l'entrée de données du pointeur de lignes 83. Le multiplexeur 70 ayant été commuté dans sa deuxième position par la disparition du signal PS, la valeur $X_c$ fournie par la sortie du registre 75 est transmise à l'entrée de données du pointeur de colonnes 71. Si le segment courant est le premier segment de la zone :

$$X_c = x_0, \quad Y_c - 1 = Y_0 - 1.$$

Si c'est un k ième segment de la zone :

$$X_c = x_k, \quad Y_c - 1 = Y_k - 1$$

Les moyens de commande 20 génèrent un signal CH pour provoquer le chargement de ces valeurs dans les pointeurs 76 et 83, puis ils génèrent successivement un signal LMI et un signal EMI pour effectuer une lecture et une annulation de la valeur $M(x, y) = M(x_0, y_0 - 1)$ dans la mémoire d'image 16. Si $M(x_0, y_0 - 1) = 0$ il n'y a pas segment connexe dont la première extrémité est située à gauche de la première extrémité du segment courant, la recherche sur la ligne supérieure va donc continuer pour des valeurs d'abscisse supérieures à $x_0$. Si $M(x, y) = 1$ la recherche se poursuit pour les valeurs x inférieures à $x_0$ jusqu'à ce que soit détectée la première extrémité du segment connexe.

Dans ce dernier cas les moyens de commande 20 mémorisent cette donnée et génèrent un signal M1 qui provoque la commutation du multiplexeur 73 dans sa première position, puis ils génèrent une suite de signaux DX constitués impulsions décrémentant la valeur x fournie par le pointeur de colonnes 71 jusqu'à ce que soit détectée une valeur $M(x, y) = 0$, qui indique que la première extrémité d'un segment connexe est détectée. Les moyens de commande 20 génèrent alors un signal SX pour stocker dans le registre 76 la valeur x + 1 constituée par la valeur x fournie par la sortie du pointeur de colonnes 71 augmentée d'une unité par l'additionneur 72, et transmise par les multiplexeurs 73 et 74 qui sont respectivement dans leur première et leur deuxième position. L'addition d'une unité permet de compenser le dépassement d'abscisse qui est nécessaire pour détecter l'extrémité du segment. Si la valeur x est décrémentée jusqu'à atteindre 0 la première sortie du pointeur de colonnes 71 fournit un signal EX. Quand les moyens de commande 20 reçoivent le signal EX ils arrêtent la décrémentation du pointeur de colonnes 71 et provoquent le stockage de la valeur $x + 1 = 1$ dans le registre 75 en générant un signal SX, car dans ce cas la première extrémité du segment connexe est située sur le premier point de la ligne, il n'est pas possible de la trouver plus à gauche.

Dans le cas où $M(x_o, y_o - 1) = 1$ les moyens de commande 20 mémorisent cette donnée et génèrent un signal $\overline{MI}$ complémentaire du signal M1, pour commuter le multiplexeur 73 dans sa deuxième position. Ensuite ils génèrent une suite de signaux IX constitués d'impulsions pour incrémenter le pointeur de colonnes 71 et rechercher à droite de la première extrémité du segment courant la première extrémité d'un premier segment connexe. Après chaque incrémentation la valeur $M(x, y)$ est lue et annulée dans la mémoire 16, puis la valeur lue est testée. Quand $M(x, y) = 1$ les moyens de commande 20 génèrent un signal SX pour stocker la valeur x dans le registre 75. Si la valeur x est incrémentée jusqu'à atteindre la valeur $X'_c = x'_k$ de l'abscisse de la deuxième extrémité du segment courant, la sortie du comparateur 84 fournit un signal FR indiquant aux moyens de commande 20 que la recherche des segments connexes sur la ligne supérieure est alors terminée.

La recherche de la seconde extrémité du premier segment connexe au segment courant sur la ligne supérieure consiste à incrémenter par une succession de signaux IX le pointeur de colonnes 71 jusqu'à ce qu'une valeur $M(x, y) = 0$ soit détectée. Alors l'abscisse de la deuxième extrémité est constituée par la valeur $x - 1$ fournie par le soustracteur 85. La soustraction d'une unité permet de compenser le fait d'avoir dépassé la deuxième extrémité du segment pour pouvoir la détecter. Si la valeur x atteint une valeur $x_{max}$ sans que la deuxième extrémité du segment soit détectée le pointeur de colonnes 71 génère un signal EX indiquant que l'extrémité droite de la ligne est atteinte et les moyens de commande 20 arrêtent l'incrémentation du pointeur de colonnes 71, l'abscisse de la deuxième extrémité est alors constituée par $x - 1 = x_{max} - 1$.

Les coordonnées des deux extrémités d'un premier segment connexe sont alors disponibles sur les trois premières sorties du dispositif 21. Les moyens de commande 20 génèrent un signal IP incrémentant le pointeur de pile 28, puis un signal EP provoquant l'écriture dans la mémoire pile 26 des valeurs de ces coordonnées. Dans l'exemple du segment 111 de la figure 9 ces valeurs sont :

$$X = x_{k+1}$$
$$x - 1 = x'_{k+1}$$
$$y = y_k - 1.$$

La recherche d'autres segments connexes situés sur la ligne supérieure se poursuit tant qu'il y a une possibilité d'en trouver d'autres, c'est-à-dire si l'abscisse de la deuxième extrémité du dernier segment connexe trouvé n'est pas supérieure ou égale à l'abscisse de la deuxième extrémité du segment courant. Par exemple sur la figure 9 après la détection de la deuxième extrémité du segment 111 la recherche peut se poursuivre à droite car $x'_{k+1}$ est inférieure $x'_k$. Après la détection de la deuxième extrémité du segment 112 la recherche peut se poursuivre car $x'_{k+2}$ est inférieure à $x'_k$. Dans cet exemple la recherche se poursuit jusqu'à ce que le comparateur 84 génère un signal FR indiquant que la valeur x est supérieure ou égale à $X'_c = x'_k$. Quand les moyens de commande 20 reçoivent le signal FR indiquant la fin de la recherche sur la ligne supérieure le signal LS est annulé et remplacé par le signal complémentaire $\overline{LS}$ qui commute le multiplexeur 80 dans sa deuxième position.

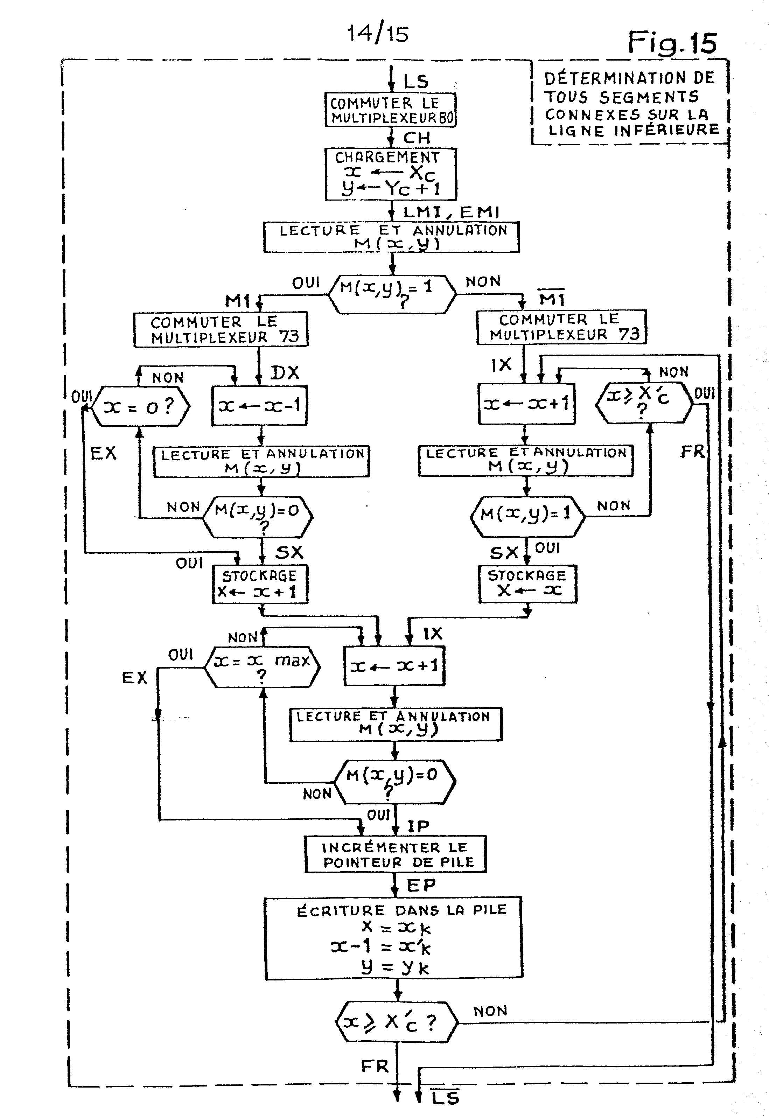

La figure 15 représente un organigramme de la détermination de tous les segments connexes au segment courant qui sont situés sur la ligne inférieure à celle du segment courant. Le multiplexeur 80 étant dans sa deuxième position il transmet la valeur $y_o$ diminuée d'une unité par le soustracteur 87, cette valeur est transmise ensuite par le multiplexeur 81 dans sa deuxième position jusqu'à l'entrée de données du pointeur de lignes 83. Les moyens de commande 20 génèrent un signal CH qui charge la valeur $Y_c + 1$ dans le pointeur de ligne 83 et qui charge la valeur $X_c$ dans le pointeur de colonnes 71. Les opérations suivantes sont identiques à celles décrites pour la détermination de tous les segments connexes sur la ligne supérieure.

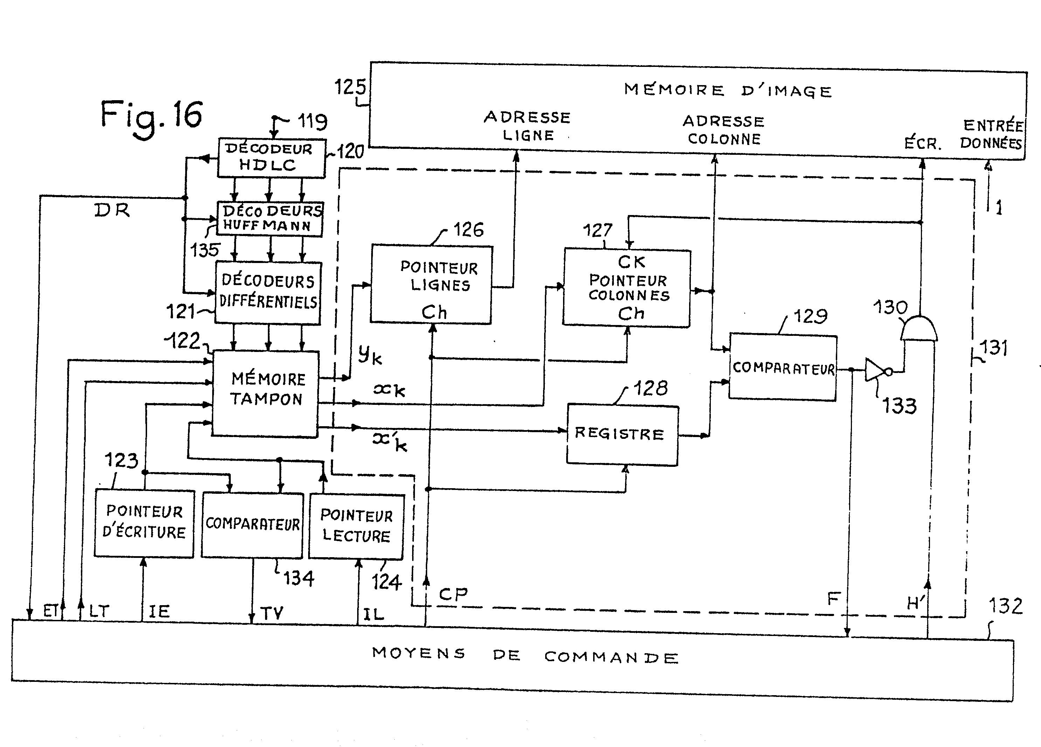

La figure 16 représente le schéma synoptique d'un exemple de réalisation du dispositif de décodage selon l'invention. Dans cet exemple le dispositif de décodage comporte une borne d'entrée 119 recevant les données codées, un décodeur HDLC 120, trois décodeurs de Huffmann 135, trois décodeurs différentiels 121, une mémoire vive 122 dite mémoire tampon, un compteur 123 dite pointeur d'adresses d'écriture, un compteur 124 dit pointeur d'adresses de lecture, un comparateur numérique 134, une mémoire vive 125 dite mémoire d'image, un dispositif 131 dit dispositif de détermination des points d'un segment, et des moyens de commande 132. Le codeur HDLC 120 possède une entrée reliée à la borne d'entrée 119, une première sortie reliée d'une part à une entrée des moyens de commande 132, à une première entrée commune aux trois décodeurs de Huffmann 135, et à une première entrée commune aux trois décodeurs différentiels 121, et trois autres sorties reliées respectivement chacune à une entrée d'un des trois décodeurs de Huffmann 135. Les trois décodeurs de Huffmann 135 ont trois sorties reliées respectivement à trois entrées des décodeurs différentiels 121. Les sorties des trois décodeurs différentiels 121 sont reliées respectivement à trois entrées de données de la mémoire tampon 122. La mémoire tampon 122 possède une entrée de commande d'écriture et une entrée de commande de lecture recevant respectivement des signaux logiques ET et LT fournis par les moyens de commande 132, une entrée d'adresse d'écriture et une entrée d'adresse de lecture reliées respectivement à une sortie du pointeur d'adresses d'écriture 123 et à une sortie du pointeur d'adresses de lecture 124, et trois sorties reliées respectivement à trois premières entrées du dispositif 131. Les pointeurs 123 et 124 possèdent chacun une entrée reliée respectivement à une sortie des moyens de commande 132 pour recevoir respectivement des signaux d'incrémentation IE et IL. Le comparateur 134 possède deux entrées reliées respectivement à la sortie du pointeur d'adresses d'écriture 123 et à la sortie du pointeur d'adresses de lecture 124, et possède une sortie reliée à une entrée des moyens de commande 132 pour leur fournir un signal logique TV quand les valeurs présentes sur les entrées sont identiques, c'est-à-dire quand la mémoire tampon 122 est vide.

Le dispositif 131 comporte un registre 126 dit pointeur de lignes, un compteur 127 dit pointeur de colonnes, un registre 128, un comparateur numérique 129, un inverseur logique 133 et une porte logique ET 130 à deux entrées. Les trois premières entrées du dispositif 121 sont reliées respectivement à une entrée du pointeur de lignes 126, à une entrée du pointeur de colonnes 127, et à une entrée du registre 128. Une deuxième entrée du dispositif 121 est reliée à une entrée de commande de chargement Ch du pointeur de lignes 126, à une entrée de commande de chargement Ch du pointeur de colonnes 127 et à une entrée de commande de chargement du registre 128, et reçoit un signal CP fourni par les moyens de commande 132. Une sortie du pointeur de lignes 126 est reliée à une entrée d'adresse ligne de la mémoire d'image 125. Une sortie du pointeur de colonnes 127 est reliée à une entrée d'adresse colonne de la mémoire d'image 125, et à une première entrée du comparateur 129. Une sortie du registre 128 est reliée à une deuxième entrée du comparateur 129. La sortie du comparateur 129 est reliée à l'entrée de l'inverseur 133 et à une entrée des moyens de commande 132, et fournit un signal logique F lorsque les valeurs numériques présent sur ses entrées sont identiques. La sortie de l'inverseur 133 est reliée à la première entrée de la porte ET 130. La deuxième entrée de la porte ET 130 est reliée à une sortie des moyens de commande 132 fournissant un signal d'horloge H', et la sortie de la porte ET 130 est reliée d'une part à une entrée d'horloge CK du pointeur de colonnes 127 et d'autre part à une entrée de commande d'écriture de la mémoire d'image 125. La mémoire d'image 125 possède une entrée de données recevant en permanence une valeur 1.

Des moyens classiques non représentés sur la figure 16 assurent la synchronisation du dispositif de décodage par rapport au dispositif de codage. Au début du décodage d'une image le dispositif est initialisé en inscrivant des valeurs 0 à toutes les adresses de la mémoire d'image 125, et en initialisant les pointeurs d'adresses d'écriture et de lecture 123 et 124. Quand le décodeur HDLC 120 détecte un drapeau dans la suite des données codées il génère un signal logique DR sur sa première sortie pour indiquer aux moyens de commande 132 le début du décodage d'une zone,

0108659

45

et pour inhiber le fonctionnement de deux décodeurs de Huffmann car les coordonnées absolues du premier point du premier segment n'ont pas subi de codage de Huffmann, et pour inhiber le fonctionnement des trois décodeurs différentiels 121 pour les trois données correspondant au premier segment de la zone, car elles ne sont pas codées différentiellement. Pour les autres segments les décodeurs différentiels 121 fournissent respectivement des coordonnées $x_{k+1}$, $x'_{k+1}$, $y_{k+1}$, désignant respectivement l'abscisse d'une première extrémité, l'abscisse d'une deuxième extrémité, et l'ordonnée des deux extrémités d'un $(k + 1)$ ième segment calculées à partir des coordonnées $x_k$, $x'_k$, et $y_k$ d'un k ième segment qui est le segment décodé immédiatement précédemment, k étant un nombre entier supérieur à 1. Ces coordonnées sont stockées dans la mémoire tampon 122 sous l'action du signal de commande ET. Après chaque écriture dans la mémoire tampon 122 les moyens de commande 132 génèrent un signal IE pour incrémenter le pointeur d'adresses d'écriture 123.

La détermination des points de chaque segment est réalisée par le dispositif 131 au rythme de l'horloge H' indépendamment du rythme de réception des données sur la borne 119. Les moyens de commande 132 génèrent un signal IL pour incrémenter le pointeur d'adresse de lecture 124, puis génèrent un signal LT pour effectuer une lecture dans la mémoire tampon 122. Les valeurs $x_k$, $x'_k$, $y_k$, sont chargées respectivement dans le pointeur de colonnes 127, dans le registre 128, et dans le pointeur de lignes 126, sous l'action du signal CP généré par les moyens de commande 132. La porte ET 130 transmet les signaux d'horloge H' à l'entrée CK du pointeur de colonnes 127 pour l'incrémenter, et à l'entrée de commande d'écriture de la mémoire d'image 125 pour inscrire des valeurs 1 aux adresses désignées pour le pointeur de lignes 126 et le pointeur de colonnes 127. Une suite d'écritures est réalisée jusqu'à ce que la valeur d'adresse fournie par la sortie du pointeur de colonnes 127 soit égale à la valeur stockée dans le registre 128. Le comparateur 129 fournit alors un signal logique F indiquant aux moyens de commande 132 que la détermination des points du segment en cours est terminée, et bloque la porte ET 130 après avoir été inversé par l'inverseur 133. L'incrémentation du pointeur de colonnes 127 est donc arrêtée. Les moyens de commande 132 réalisent une autre lecture dans la mémoire tampon 122 pour déterminer les points d'un autre segment. Ce processus est réitéré jusqu'à ce que la mémoire tampon 122 soit vide, la valeur d'adresse fournie par le pointeur d'adresse d'écriture 123 est alors identique à la valeur d'adresse fournie par le pointeur d'adresse de lecture 124, le comparateur 134 fournit le signal logique TV indiquant aux moyens de commande 132 que la mémoire tampon est vide. Les moyens de commande 132 attendent alors la disparition du signal TV indiquant que des données nouvelles ont été inscrites dans la mémoire tampon 122.

Dans un autre exemple de réalisation, où le nombre de propriétés possédées par les points d'une image serait supérieur à 2, le décodeur 120 aurait en outre pour rôle de restituer, pour chaque zone, le mot binaire désignant la propriété commune à tous les points de la zone et fournir cette valeur à l'entrée de données de la mémoire d'image 135 pendant toute la durée du décodage de la zone.

Dans un autre exemple de réalisation où la longueur du $(k + 1)$ième segment serait codée différentiellement par rapport à la longueur du $k$ième segment, un quatrième décodeur différentiel serait adjoint aux trois décodeurs différentiels 121 déjà mentionnés afin de calculer la longueur des segments avant de calculer l'abscisse de leur seconde extrémité.

La portée de l'invention ne se limite pas aux dispositifs de codage et aux dispositifs de décodage conformes aux exemples de réalisation décrits ci-dessus, il est à la portée de l'homme de l'art de les réaliser différemment.

47

## REVENDICATIONS

1. Procédé de codage et décodage d'une image, consistant à regrouper dans des zones des points connexes ayant une même propriété ; à décomposer ces zones en segments ; à coder chaque segment ; puis à décoder successivement chaque segment de chaque zone ; caractérisé en ce que chaque point ayant la propriété considérée est attribué :

- à une zone nouvelle si le point voisin, dit point à gauche, le précédant immédiatement sur la même ligne et le point voisin, dit point au-dessus, qui est son homologue sur la ligne précédente, n'ont pas la propriété considérée ;

- à la zone du point à gauche si le point à gauche a cette propriété et le point au-dessus ne l'a pas ;

- à la zone du point au-dessus si le point au-dessus a cette propriété et le point à gauche ne l'a pas ;

- à la zone résultant de l'absorption de la zone du point à gauche par la zone du point au-dessus si :

— les deux points voisins ont cette propriété,

—— et leurs deux zones sont distinctes,

—— et la zone du point à gauche n'a absorbé aucune zone précédemment ;

- à la zone résultant de l'absorption de la zone du point au-dessus par la zone du point à gauche si :

—— les deux points voisins ont cette propriété,

—— et leurs deux zones sont distinctes,

—— et la zone du point à gauche a absorbé au moins une zone précédemment,

—— et la zone du point au-dessus n'a absorbé aucune zone précédemment ;

- à une zone commune au point à gauche et au point au-dessus si :

—— ces deux points ont cette propriété,

—— et ils appartiennent à une même zone ;

et consiste pour chaque zone :

- à indiquer quelle est cette propriété ;

- à décomposer la zone en segments parallèles et connexes ;

- à coder un premier segment quelconque par trois valeurs définissant la position de ce segment dans l'image, et sa longueur ;

- à coder un (k + 1)ième segment (k étant un entier supérieur à 1) par deux valeurs définissant sa position relativement à un k ième segment et par une valeur définissant sa longueur, le k ième segment étant un segment qui appartient à la zone considérée et qui a été codé immédiatement avant le (k + 1)ième segment, le (k + 1)ième segment étant choisi selon une règle de priorité fixée, parmi les segments connexes au k ième segment s'il y en a, sinon parmi les segments qui appartiennent à la zone considérée et n'ont pas encore été codés,

et en ce que pour restituer sa propriété à chaque point de l'image, le décodage consiste pour chaque zone :

- à déterminer les coordonnées de chaque point du premier segment, à partir des trois valeurs codant ce premier segment ;

- à déterminer successivement les coordonnées de chaque point de chaque (k + 1)ième segment de la zone considérée à partir des trois valeurs définissant sa longueur et définissant sa position par rapport au k ième segment, et à partir des coordonnées des points du k ième segment.

2. Procédé selon la revendication 1, caractérisé en ce qu'un point ayant la propriété considérée est attribué à la zone du point à gauche si :

- les deux points voisins ont la propriété considérée ;

- et leurs deux zones sont distinctes ;

- et elles ont chacune déjà absorbé au moins une zone.

3. Procédé selon la revendication 1, caractérisé en ce qu'un point ayant la propriété considérée est attribué à la zone résultant de l'absorption de la zone du point au-dessus par la zone du point à gauche si :

- les deux points voisins ont la propriété considérée ;

- et leurs deux zones sont distinctes ;

- et elles ont chacune déjà absorbé au moins une zone.

4. Procédé selon l'une des revendications 1 à 3, caractérisé en ce qu'il consiste en outre à :

- à désigner chaque zone par une valeur de numéro $Z_i$ ; et à la caractériser par un vecteur d'état $\overrightarrow{E_{z_i}}$ ayant notamment pour composantes :

- $x_o$, $y_o$ les coordonnées du premier point attribué à la zone,

- $T_{z_i}$ la valeur d'un bit, dit indicateur d'absorption, indiquant si la zone a absorbé au moins une autre zone ;

- $U_{z_i}$ la valeur d'un bit, dit indicateur de disparition, indiquant si la zone a été absorbée par une autre zone ;

et consiste à actualiser la valeur des composantes du vecteur d'état des zones, au fur et à mesure de l'attribution des points, celle-ci entraînant des créations et des disparitions de zones.

5. Procédé selon l'une quelconque des revendications 1 à 4, caractérisé en ce que les trois valeurs définissant la position et la longueur d'un segment sont des valeurs ayant subi respectivement un codage de Huffmann.

6. Procédé selon l'une quelconque des revendications 1 à 5, caractérisé en ce que la valeur définissant la longueur d'un (k + 1)ième segment est une valeur codée de la différence entre la longueur de ce segment et la longueur du k ième segment pour k entier supérieur à 1, et est une valeur codée de la longueur pour le premier segment de chaque zone.

7. Dispositif de codage, pour la mise en oeuvre du procédé selon la revendication 2, caractérisé en ce qu'il comporte :

- un dispositif (21), dit générateur d'adresses et d'états, déterminant pour chaque point une valeur d'adresse qui constitue le numéro de la zone à laquelle est attribué ce point et actualisant les valeurs des bits indicateurs du vecteur d'état de cette zone ;

- une mémoire (23), dite mémoire d'états, pour stocker les valeurs des composantes des vecteurs d'états de toutes les zones d'une image ;

- une mémoire (22), dite mémoire d'adresses, pour établir une correspondance entre la valeur des numéros des zones absorbées et la valeur des numéros des zones les ayant absorbées ;

- un dispositif (25) de détermination des segments connexes à un segment donné ;

- une mémoire (26), dite mémoire pile, et un pointeur de segments (28) pour stocker les données définissant les segments connexes déterminés par le dispositif (25) de détermination des segments connexes à un segment donné ;

- un pointeur de zones (27) pour fournir à la mémoire d'états (23) une suite de valeurs d'adresses désignant successivement chaque zone à décomposer en segments ;

- une mémoire (16), dite mémoire d'image pour stocker des données désignant la propriété possédée par chaque point de toute une image ;

- trois codeurs différentiels (29), pour déterminer respectivement les deux valeurs définissant la position relative du (k + 1)ième segment par rapport au k ième segment et sa longueur, pour k entier supérieur à 1 ;

- un codeur (31) intercalant, entre les paquets de données correspondant à deux zones successives, un drapeau et un mot binaire désignant la propriété possédée par les points d'une zone ;

- une mémoire tampon (32), pour régulariser le débit des informations codées sortant du dispositif de codage.

8. Dispositif de codage selon la revendication 7, pour la mise en oeuvre du procédé selon la revendication 5, caractérisé en ce qu'il comporte en outre trois codeurs de Huffmann (30), pour coder respectivement avec un code de Huffmann chacune des trois valeurs fournies par les codeurs différentiels (29) puis les transmettre au codeur (31) intercalant un drapeau entre les paquets de données.

9. Dispositif de décodage, pour la mise en oeuvre du procédé selon la revendication 5, caractérisé en ce qu'il comporte :

- un décodeur (120) pour recevoir les données codées, détecter les drapeaux, indiquer la propriété possédée par les points de chaque zone, et fournir un triplet de valeurs ;

- trois décodeurs différentiels (121) recevant le triplet de valeurs fournies par le décodeur (120) et calculant un triplet de valeurs décodées définissant la position et la longueur d'un (k + 1)ième segment, à partir des valeurs décodées définissant la position et la longueur du k ième segment, qui est le segment décodé immédiatement précédemment, pour k entier supérieur à 1 ;

- une mémoire (122), dite mémoire tampon, pour stocker ces

0108659

51

triplets de valeurs décodées ;

- une mémoire (125), dite mémoire d'image, pour stocker les données désignant la propriété possédée par chaque point d'une image ;

- un dispositif (131), dit de détermination des points d'un segment, générant pour chaque triplet de valeurs décodées une suite de valeurs d'adresse désignant les points constituant un segment, pour inscrire dans la mémoire d'image (125) les données désignant la propriété possédée par tous les points du segment considéré.

10. Dispositif de décodage selon la revendication 9, pour la mise en oeuvre du procédé selon la revendication 5, caractérisé en ce qu'il comporte en outre trois décodeurs de Huffmann (135), pour décoder respectivement selon un code de Huffmann chacune des valeurs du triplet fourni par le décodeur (120) et les transmettre aux trois décodeurs différentiels (121).

Fig.1

Fig.2

MÉMOIRE D'IMAGE

16

15

17

21 — DISPOSITIF GÉNÉRATEUR D'ADRESSES ET D'ÉTATS

22 — MÉMOIRE D'ADRESSES

23 — MÉMOIRE D'ÉTATS

DISPOSITIF DE DÉTERMINATION DES ZONES D'UNE TRAME

18

25 — DISPOSITIF DE DÉTERMINATION DES SEGMENTS CONNEXES AU SEGMENT COURANT

27 — POINTEUR DE ZONES

26 — MÉMOIRE PILE

28 — POINTEUR DE SEGMENTS

DISPOSITIF DE DÉTERMINATION DES SEGMENTS D'UNE ZONE

19

CODEURS DIFFÉRENTIELS

29

CODEURS HUFFMANN

30

31 — CODEUR HDLC

32 — MÉMOIRE TAMPON

33

20 — MOYENS DE COMMANDE

2/15

0108659

Fig.3

Fig.4

Fig. 5

4/15

0108659

Fig.6

0108659

Fig.7

0108659

Fig.8

0108659

$$x_{k+1} \quad x'_{k+1} \qquad x_{k+2} \qquad x'_{k+2}$$

$$x_k \qquad x'_k$$

$$x_0 \qquad x'_0 \qquad x_{k+3} \qquad x'_{k+3}$$

111  112  110  113

Fig.9

Fig.10

0108659

Fig.11

11/15

$v_{zi} = 0$

Fig. 12

DÉTERMINATION
DES SEGMENTS
D'UNE ZONE

PS
INITIALISATION
DU POINTEURS
DE SEGMENTS

COMMUTER LES MULTIPLEXEURS 70, 74, 81

DÉTERMINATION DU PREMIER
SEGMENT DE LA ZONE

LP
LECTURE PILE

FS
CODAGE ET TRANSMISSION

$SX_c, SY_c, SX'_c$

STOCKAGE $X_c \leftarrow x_0, Y_c \leftarrow y_0, X'_c \leftarrow x'_0$

$\overline{PS}$
COMMUTER LES MULTIPLEXEURS 70, 74, 81

LS
DÉTERMINATION DE TOUS LES
SEGMENTS CONNEXES SITUÉS
SUR LA LIGNE SUPÉRIEURE

$\overline{LS}$
DÉTERMINATION DE TOUS LES
SEGMENTS CONNEXES SITUÉS
SUR LA LIGNE INFÉRIEURE

NON — PV=1 ? — OUI

LP
LECTURE PILE
1 SEGMENT

FS
TRANSMISSION

$SX_c, SY_c, SX'_c$

STOCKAGE DE $X_c, Y_c, X'_c$

DP
DÉCRÉMENTER
POINTEUR DE SEGMENTS

LS

FZ

Fig. 13

Fig.14

0108659

13/15

DÉTERMINATION DE TOUS SEGMENTS CONNEXES SUR LA LIGNE SUPÉRIEURE

Fig.15

14/15

0108659

DÉTERMINATION DE TOUS SEGMENTS CONNEXES SUR LA LIGNE INFÉRIEURE

Fig. 16

Office européen
des brevets

**RAPPORT DE RECHERCHE EUROPEENNE**

Numéro de la demande

EP  83 40 1891

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-4 103 287  (FRANK) <br> * Colonne  3, ligne 50 - colonne 7, ligne 37; colonne 10, ligne 33 - colonne 14, ligne 35 * | 1-7,9 | H 04 N   7/13 <br> H 04 N   1/41 <br> G 06 K   9/60 |
| | --- | | |
| Y | US-A-4 122 518  (CASTLEMAN) <br> * Colonne 7, lignes 8-12; colonne 13,  ligne 68 - colonne 22, ligne 21; colonne 15, ligne 8 - colonne 16,  ligne 10; colonne 23, lignes 1-24;  colonne  38,  ligne  60  - colonne 40, ligne 16; colonne 41, ligne 53 - colonne 42, ligne 55 * | 1-7,9 | |
| | --- | | |
| Y | IBM TECHNICAL DISCLOSURE BULLETIN, vol. 22, no. 7, décembre 1979, pages 2980-2985, New York, US <br> J.L.  MITCHELL:  "Vertical refer- ence   coding   for   digital gray-level images" * En entier * | 1 | |
| | | | **DOMAINES TECHNIQUES RECHERCHES (Int. Cl. ³)** |
| | --- | | |
| Y | CONFERENCE RECORD ON THE NATIONAL TELECOMMUNICATIONS CONFERENCE, vol. 2 de 4, 30 novembre - 4 décembre 1980, Houston, pages 36.7.1 - 36.7.4, Houston, US <br> P.H.  CHEN: "A picture coding technique for facsimile" * Page 36.7.1, colonne de gauche, ligne 13 - page 36.7.3, colonne de gauche, ligne 7 * | 1,6 | H 04 N   7 <br> H 04 N   1 <br> G 06 K   9 |
| | ---          -/- | | |

Le présent rapport de recherche a été établi pour toutes les revendications

| Lieu de la recherche <br> LA HAYE | Date d'achèvement de la recherche <br> 20-01-1984 | Examinateur <br> VERSCHELDEN J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

**Office européen des brevets**

**RAPPORT DE RECHERCHE EUROPEENNE**

EP 83 40 1891

| | **DOCUMENTS CONSIDERES COMME PERTINENTS** | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| Y | CONFERENCE RECORD ON THE INTERNATIONAL CONFERENCE ON TELECOMMUNICATIONS, vol. 2 de 4, 14-18 juin 1981, pages 22.2.1 - 22.2.3, Denver, US R.H. WALLIS et al.: "Video tele-conferencing at 9,600 Baud" * En entier * | 1,6 | |
| Y | IEEE TRANSACTIONS ON COMMUNICATIONS, vol. COM-26, no. 6, juin 1978, pages 936-939, IEEE, New York, US J.W. WOODS: "Two-dimensional delta-mod facsimile coding" * En entier * | 6 | |
| Y | EP-A-0 025 760 (COMMISSARIAT A L'ENERGIE ATOMIQUE) * Page 4, ligne 26 - page 9, ligne 12; page 13, ligne 20 - page 24, ligne 36 * | 1,6 | DOMAINES TECHNIQUES RECHERCHES (Int. Cl. ³) |
| Y | US-A-3 999 047 (GREEN) * Colonne 9, ligne 38 - colonne 23, ligne 25 * | 1 | |

Le présent rapport de recherche a été établi pour toutes les revendications

| Lieu de la recherche LA HAYE | Date d'achèvement de la recherche 20-01-1984 | Examinateur VERSCHELDEN J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant